# EUROPEAN PATENT APPLICATION

(11) **EP 4 676 071 A1**
(43) Date of publication of application: **07.01.2026**
(21) Application number: 23925250.5
(22) Date of filing: 28.02.2023
(51) Int. Cl.: H04N 23/60

(54) **IMAGING PROGRAM, IMAGING METHOD, AND IMAGING DEVICE**

(71) Applicant: Iwasawa, Yuki, Yokohama-shi, Kanagawa 235-0021 (JP)
(72) Inventor: Iwasawa, Yuki, Yokohama-shi, Kanagawa 235-0021 (JP)
(74) Representative: AWA Sweden AB
(86) International application number: PCT/JP2023/007437
(87) International publication number: WO 2024/180693

(57) **Abstract**

An imaging program that causes an imaging device comprising a display, a camera, an input unit, and a computation unit to execute: a function for displaying, on the display, a list of one or a plurality of pieces of tableware that are stored in a tableware database and receiving selection of the one or plurality of pieces of tableware that are to be used from the list of one or a plurality of pieces of tableware; a function for determining, according to the selected one or plurality of pieces of tableware and on the basis of an arrangement table, one or a plurality of candidates for the optimal arrangement of the selected one or plurality of pieces of tableware and showing the determined one or plurality of candidates on the display; a function for receiving a selection from among the one or plurality of candidates and generating a guide for the selected candidate; and a function for activating the camera and displaying the guide within an image capturing screen captured by the camera, the image capturing screen being displayed on the display.

## Description

### BACKGROUND OF THE INVENTION

### 1. Field of the Invention

This invention relates to an imaging program, an imaging method, and an imaging device.

### 2. Description of Related Art

Methods for causing food images to be looked delicious have been disclosed (see, for example, patent document 1). The method disclosed in patent document 1 is directed to a method of adding motion to a still image of a food, for example, a state of heating, as if the food has just been cooked. Attention needs to be paid not only to food itself but also to the composition of tableware on which the food is served to capture beautiful images of the food served on the tableware.

### Prior Art Documents

### Patent Documents

Patent document 1: Japanese Registered Patent No. 6039527

### SUMMARY OF THE INVENTION

### Problems to be Solved by the Invention

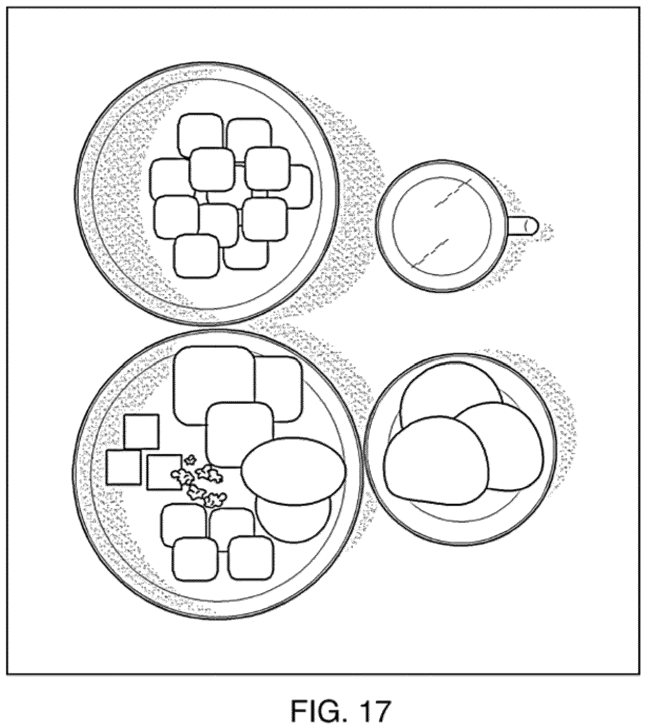

When serving food on multiple pieces of tableware and imaging the food, it may take time to determine the composition of the tableware, such as the arrangement of the tableware, by imaging different arrangements of the tableware and examining them. In addition to the arrangement of the tableware, many other factors need to be considered when a user captures an image, such as the angle of the shot to the tableware, and the position of the lighting. If the user is not skilled in photography, it may take time to capture the image, and as shown in FIG. 17, the composition of the food image may be less excellent.

In view of the above problems, it is an object of the present invention to provide an imaging program, an imaging method, and an imaging device that enable users without photographic skills to capture beautiful food images.

### Means to Solve the Problem

According to a first aspect of the present invention, an imaging program causes an imaging device including a display, a camera, an input unit that accepts input from a user, and a computation unit to embody the functions of: displaying a list of one or more pieces of tableware listed in a tableware database on the display and accepting a selection of one or more pieces of tableware to be used from the list of one or more pieces of tableware; determining, from the selected one or more pieces of tableware, one or more candidates for an optimal arrangement of the selected one or more pieces of tableware on the basis of an arrangement table, and displaying the determined one or more candidates on the display; accepting a selection of a desired arrangement from the one or more candidates, generating a guide for a selected candidate and displaying it on the display; and activating the camera and displaying the guide in an image capturing screen by the camera displayed on the display.

In the first aspect of the invention, the one or more pieces of tableware listed in the tableware database may all have a same height.

In the first aspect of the invention, the one or more pieces of tableware listed in the tableware database may all have a rim with a same thickness.

In the first aspect of the invention, all of the one or more pieces of tableware listed in the tableware database may each have a consistent design for at least one of corners and rims of the tableware.

In the first aspect of the invention, the guide may be indicated by an outline of each of the pieces of tableware in the desired arrangement.

In the first aspect of the invention, the guide may indicate an arrangement of the pieces of tableware to be imaged from directly above the pieces of tableware to be imaged.

In the first aspect of the invention, the function of displaying a list of all optimal arrangements listed in the arrangement table on the display and the composition selection function of accepting a selection of a configuration desired by the user may further be embodied.

In the first aspect of the invention, the function of selecting the composition may accept a selection of a situation in which tableware is used from possible configurations, and display on the display a list of configurations narrowed down by the situation in which the tableware is used.

In the first aspect of the invention, the function for selecting the composition may accept a selection of a shape of an image obtained by imaging by the camera, and displays on the display a list of configurations narrowed down by the shape of the image.

In the first aspect of the invention, a tableware database editing function of accepting an input of the user to perform editing of at least one of changing a number of one or more pieces of tableware listed in the tableware database, or adding a new piece of tableware to the tableware database may further be embodied.

In the first aspect of the invention, the function of adjusting an arrangement of the pieces of tableware configuring the selected arrangement may further be embodied.

In the first aspect of the invention, the function of adjusting the arrangement of the pieces of tableware may cause the adjusted arrangement to be stored in the arrangement table.

In the first aspect of the invention, an image editing function of performing image processing on an image captured by the camera may further be embodied.

In the first aspect of the invention, when x is a length of a side or diameter of a piece of tableware with a side of a smallest length or diameter among the one or more pieces of tableware listed in the tableware database, a length of a side or diameter or maximum width of another piece of tableware may be n × x + P(n-1) times (where n is an integer greater than or equal to 1, and P is greater than or equal to 0).

In the first aspect of the invention, at least one of a name of a manufacturer, product name, or serial number of the one or more pieces of tableware listed in the tableware database may be marked on a surface of the one or more pieces of tableware.

According to a second aspect of the present invention, an imaging method causes an imaging device including a display, a camera, an input unit that accepts input from a user, and a computation unit to perform the steps of: displaying a list of one or more pieces of tableware listed in a tableware database on the display and accepting a selection of one or more pieces of tableware to be used from the list of one or more pieces of tableware; determining, from the selected one or more pieces of tableware, one or more candidates for an optimal arrangement of the selected one or more pieces of tableware on the basis of an arrangement table, and displaying the determined one or more candidates on the display; accepting a selection from the one or more candidates and generating a guide for a selected candidate; and activating the camera and displaying the guide in an image capturing screen by the camera displayed on the display.

According to a third aspect of the present invention, an imaging device includes: a display; a camera; an input unit that accepts input from a user; and a computation unit including: a tableware selector that displays a list of one or more pieces of tableware listed in a tableware database on the display and accepts a selection of one or more pieces of tableware to be used from the list of one or more pieces of tableware; and an arrangement generator that determines one or more candidates for an optimal arrangement of the one or more pieces of tableware on the basis of an arrangement table, shows the determined one or more candidates on the display, accepts a selection of a desired arrangement from among the one or more candidates, and then generates a guide for the selected candidate and displays it on the display. The arrangement generator displays the guide on the display, and then activates the camera, and the guide is displayed on an image capturing screen of the camera. Advantageous Effects of the Invention

The present invention provides an imaging program, imaging method, and imaging device that enable users without photographic skills to capture beautiful food images.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 shows a block diagram illustrating an example of a configuration of an imaging device according to a first embodiment,
FIGS. 2A and 2B each show an example of a screen of the imaging device when a list of pieces of tableware is displayed on a display by a tableware selector of the imaging device according to the first embodiment,
FIGS. 3A and 3B each show an example of the screen of the imaging device when a list of pieces of tableware is displayed on the display by the tableware selector of the imaging device according to the first embodiment,
FIG. 4 shows a schematic diagram illustrating an image of an example of pieces of tableware captured by the imaging device according to the first embodiment,
FIG. 5 shows a flowchart describing an operation of the imaging device according to the first embodiment,
FIGS. 6A to 6C each show a schematic diagram illustrating a front cross-sectional view of an example of a piece of tableware used in a second embodiment where FIG. 6A shows a large plate, FIG. 6B shows a small plate, and FIG. 6C shows a cup,
FIGS. 7A to 7C each show a perspective view illustrating the piece of tableware shown in corresponding one of FIGS. 6A to 6C viewed from above where FIG. 7A shows the large plate, FIG. 7B shows the small plate, and FIG. 7C shows the cup,
FIGS. 8A to 8C each show a perspective view illustrating the piece of the tableware shown in corresponding one of FIGS. 6A to 6C viewed from below where FIG. 8A shows the large plate, FIG. 8B shows the small plate, and FIG. 8C shows the cup,
FIGS. 9A to 9C each show a schematic diagram illustrating a frontal cross-sectional view of an example of a common piece of tableware where FIG. 9A shows a large plate, FIG. 9B shows a small plate, and FIG. 9C shows a cup,
FIGS. 10A to 10C each show a perspective view illustrating the piece of tableware shown in corresponding one of FIGS. 9A to 9C from above where FIG. 10A shows the large plate, FIG. 10B shows the small plate, and FIG. 10C shows the cup,
FIGS. 11A to 11C each show a perspective view illustrating the piece of tableware shown in corresponding one of FIGS. 9A to 9C from below where FIG. 11A shows the large plate, FIG. 11B shows the small plate, and FIG. 11C shows the cup,
FIGS. 12A to 12C each show a schematic diagram illustrating a frontal cross-sectional view of another example of a common piece of tableware where FIG. 12A shows a flat plate, FIG. 12B shows a flat plate, and FIG. 12C shows a cup,
FIGS. 13A to 13C each show a schematic diagram illustrating an image of pieces of tableware used in the imaging device according to the second embodiment arranged and captured from above where FIG. 13A shows a shot in a normal setting, FIG. 13B shows a wide shot, and FIG. 13C shows a shot with a zoom,
FIGS. 14A to 14C each show a schematic diagram illustrating an image of common pieces of tableware arranged and captured from above where FIG. 14A shows a shot in a normal setting, FIG. 14B shows a wide shot, and FIG. 14C shows a shot with a zoom,
FIGS. 15A to 15C each show a schematic diagram illustrating an image of the same pieces of tableware as in corresponding one of FIGS. 14A to 14C arranged and captured from above where FIG. 15A shows a shot captured from the farthest distance, FIG. 15B shows a shot captured from an intermediate distance, and FIG. 15C shows a shot captured from the nearest distance,
FIGS. 16A to 16C each show a schematic diagram illustrating an image of common pieces of tableware arranged and captured from above where FIG. 16A shows a shot where the tableware is illuminated from above, FIG. 16B shows a shot where it is illuminated from the side, and FIG. 16C shows a shot where the tableware is lifted,
FIG. 17 shows a schematic diagram illustrating an image of an example of pieces of tableware captured by a user without photographic skills,
FIGS. 18 shows a schematic diagram illustrating a front view of an example of the pieces of tableware used in the second embodiment,
FIG. 19 shows a schematic diagram illustrating a top view of an example of square pieces of tableware used in the second embodiment,
FIG. 20 shows a schematic diagram illustrating a top view of an example of rectangular pieces of tableware used in the second embodiment,
FIG. 21 shows a schematic diagram illustrating a top view of an example of circular pieces of tableware used in the second embodiment,
FIG. 22 shows a schematic diagram illustrating a top view of an example of capsule-shaped pieces of tableware used in the second embodiment,
FIGS. 23A to 23E each show a side view illustrating an example of tableware used for an imaging device according to a third embodiment where FIG. 23A shows a large plate without a raised platform, FIG. 23B shows a large plate with a raised platform, FIG. 23C shows a small plate with a raised platform, FIG. 23D shows a small plate without a raised platform, and FIG. 23E shows a cup,
FIGS. 24A to 24E each show a top view illustrating the piece of tableware shown in corresponding one of FIGS. 23A to 23E,
FIGS. 25A to 25E each show a perspective view illustrating the piece of tableware shown in corresponding one of FIGS. 23A to 23E viewed from below,
FIGS. 26A to 26E each show a perspective view illustrating the piece of tableware shown in corresponding one of FIGS. 23A to 23E viewed from above,
FIG. 27B and 27C each show an enlarged view of a portion of the piece of tableware shown in corresponding one of FIGS. 24A and 24B,
FIGS. 28A to 28E each show a side view illustrating the piece of tableware shown in corresponding one of FIGS. 24A to 24E without a raised platform,
FIG. 29 shows schematic diagrams each illustrating a front view of an example of tableware used in the third embodiment,
FIG. 30 shows a perspective view illustrating the tableware shown in FIG. 29 viewed from above,
FIG. 31 shows a front schematic diagram illustrating a stacking of tableware used in the third embodiment,
FIG. 32 shows a front cross-sectional view of the tableware shown in FIG. 31,
FIGS. 33A to 33F each show a schematic diagram illustrating an example of tableware used in the third embodiment where FIG. 33A shows a bowl, FIG. 33B shows a chopstick stand, FIG. 33C shows a vase, FIG. 33D shows a small bottle, FIG. 33E shows a teapot, and FIG. 33F shows the same tableware shown in FIG. 23B,
FIGS. 34A to 34E each show a top view of the tableware shown in corresponding one of FIGS. 33A to 33E,
FIGS. 35A to 35E each show a diagram of the tableware shown in corresponding one of FIGS. 33A to 33E viewed from below,
FIGS. 36A to 36E each show a diagram of the tableware shown in corresponding one of FIGS. 33A to 33E viewed from above,
FIGS. 37A to 37E each show a front view of the tableware shown in corresponding one of FIGS. 33A to 33E,
FIGS. 38A to 38E each show a front cross-sectional view of the tableware shown in corresponding one of FIGS. 33A to 33E, and
FIG. 39 shows a top schematic diagram illustrating an example of tableware used in a fourth embodiment.

### DETAILED DESCRIPTION OF EMBODIMENTS

Next, embodiments of the present invention will be described with reference to the drawings. In the description of the drawings for the embodiments, the same or similar reference numerals are assigned to the same or similar portions. The drawings may also include portions where the relationships differ from one another.

The embodiments illustrate examples of devices and methods to embody the technical concept of the present invention, and the technical concept of the present invention does not specify the configuration of the components, for example, to those described below. The technical concept of the present invention may be modified in various ways within the technical scope specified by the claims.

### First Embodiment

An imaging device according to a present embodiment is directed to a device that allows a user to capture beautiful food images without needing to pay attention to the lighting and arrangement of the tableware, the size of the tableware in the image, and the background, for example.

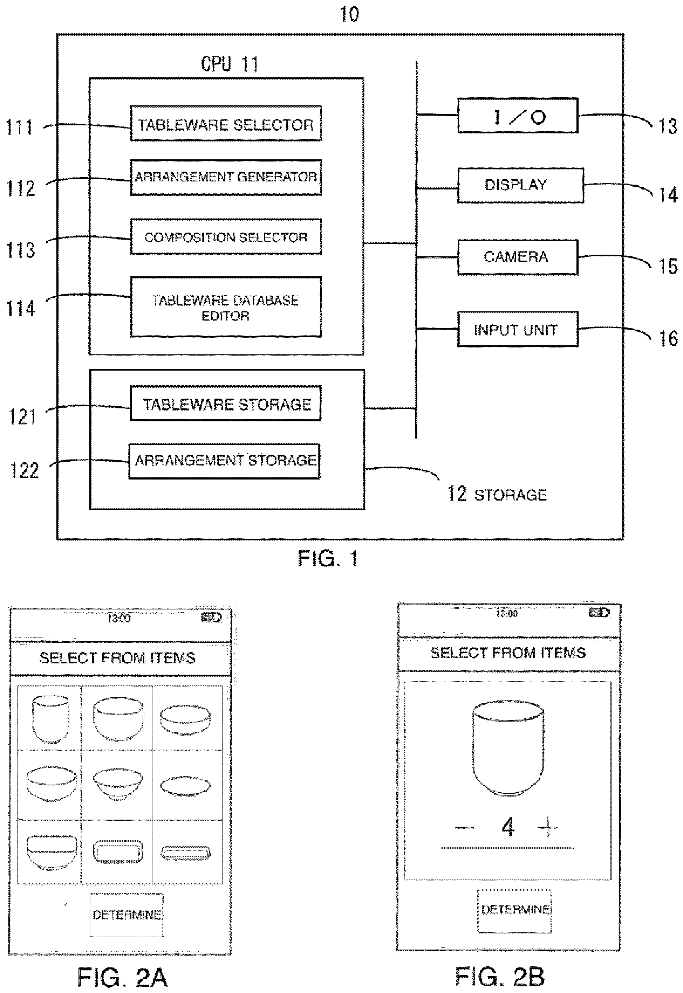

The imaging device according to the present embodiment will be described with reference to FIG. 1. As shown in FIG. 1, the imaging device 10 according to the present embodiment is configured by a CPU 11 that executes various computation, a storage 12 that stores programs and data for processing, an input-output interface (I/O) 13, a display 14, a camera 15, and an input unit 16.

The imaging device 10 is assumed to be a mobile terminal including a camera in this embodiment, but the imaging device 10 may be a personal computer (PC), mainframe, workstation, cloud computing system, or various other electronic computers (computing resources), and the display 14, camera 15, and input unit 16 may be connected to the imaging device 10 via wireless communication or cables, for example.

The display 14 corresponds to a display or other display device that shows the results of computation by the CPU 11 and other information. The input unit 16 is embodied by a keyboard, mouse, or other input device that accepts input from the user and transmits it to the CPU 11. As an example, in this embodiment, the display 14 is a touch panel display and the input unit 16 is embodied by the touch panel display.

The camera 15 (not shown in FIG. 1) may include, as an example, an optical unit, an image sensor, and a signal processor. The image data obtained by the camera 15 is transmitted to the display 14 on which the image captured by the camera 15 is displayed. The configuration of the camera 15 described above is an example, and the camera 15 may be of any configuration if the image captured by the camera 15 can be received by the imaging device 10 as digital data.

The block diagram in FIG. 1 shows functional units in the CPU 11 and storage 12. When the functional units of the CPU 11 are embodied by software, the CPU 11 executes the instructions of the program, which is the software that embodies the functions. In detail, the functional units may include a tableware selector 111 and an arrangement generator 112, for example. The storage 12 includes a tableware storage 121 and an arrangement storage 122.

The tableware selector 111 displays a list of tableware described in the tableware database stored in the tableware storage 121 on the display 14 and accepts selection of one or more pieces of tableware to be used from the list of tableware. The tableware selector 111 transmits the accepted selected tableware information describing the one or more pieces of tableware to be used to the arrangement generator 112.

Upon receiving the selected tableware information from the tableware selector 111, the arrangement generator 112 determines one or more candidates for an optimal arrangement of the one or more pieces of tableware to be used from the one or more pieces of tableware to be used described in the selected tableware information on the basis of the arrangement table stored in the arrangement storage 122, receives the selection of a desired arrangement from among the determined one or more candidates for the optimal arrangement, and displays the received desired arrangement on the display 14.

The tableware storage 121 stores a tableware database that contains information on one or more pieces of tableware used by the user to image food. The tableware database may include types, sizes, materials, colors, and names of manufacturers of one or more tableware used by the user to image the food. The types of tableware described in the tableware database may include types such as Japanese tableware, western tableware, Chinese tableware, Korean tableware, glasses, cutlery, and chopsticks, for example, and, in the case of Japanese tableware, also include types corresponding to the foods, such as bowls and plates.

The arrangement storage 122 stores an arrangement table that describes the optimal arrangement of all combinations of all pieces of tableware stored in the tableware database. The optimal arrangement listed in the arrangement table is not necessarily unique for every possible combination of all the pieces of tableware stored in the tableware database. That is, more than one optimal arrangement of a certain combination of pieces of tableware may be present among all the pieces of tableware stored in the tableware database. Accordingly, the arrangement table may contain all of the optimal arrangements of all combinations of all pieces of tableware stored in the tableware database.

When capturing images of food(s) or a dining table, the user arranges the food(s) on one or more pieces of tableware, appropriately arranges the one or more pieces of tableware on which the food(s) is served, and captures images using the imaging device 10. Prior to this image capturing, the user selects the desired one or more pieces of tableware from among the one or more pieces of tableware that have been registered in the imaging device 10 in advance. At this time, the tableware selector 111 displays a list of tableware listed in the tableware database stored in the tableware storage 121 on the display 14 and accepts the selection of one or more pieces of tableware to be used from the list of tableware.

FIG. 2A shows an example of a screen of the imaging device 10 when a list of pieces of tableware is displayed on the display 14 by the tableware selector 111. The imaging device 10 shown in FIGS. 2A and 2B corresponds to a mobile terminal, and the touch panel of the mobile terminal corresponds to the display 14. The display 14 in FIG. 2A shows images 20 of nine types of tableware, as an example, among the pieces of tableware registered in advance, and all of the registered pieces of tableware are displayed by, for example, tapping at a certain position on the display 14. When the user selects a piece of tableware from among the pieces of tableware displayed on the display 14 in FIG. 2A, as an example, the tableware is selected by tapping the image of the tableware to be selected with a finger of the user.

When the tableware selector 111 accepts a selection from the list of tableware shown in FIG. 2A, it may represent the selected tableware on the display 14 and accept detailed settings for the selected tableware as shown in FIG. 2B. In FIG. 2B, the tableware selector 111 accepts the number of selected pieces of tableware as a detailed setting, but in addition to the number, it may accept, for example, the size, color, and material of each selected piece of tableware as detailed settings. After accepting the detailed settings, the tableware selector 111 determines the selected tableware and the detailed settings thereof by tapping the determination portion shown in FIG. 2B, and again shows the list of registered pieces of tableware on the display 14.

The tableware selector 111 accepts a selection from the list of tableware shown in FIG. 2A, determines all of the one or more tableware to be used by the user and their respective detailed settings, then determines all of the one or more tableware to be used by the user when the determination portion shown in FIG. 2A is tapped, and transmits the selected tableware information including information on all of the one or more tableware to be used to the arrangement generator 112.

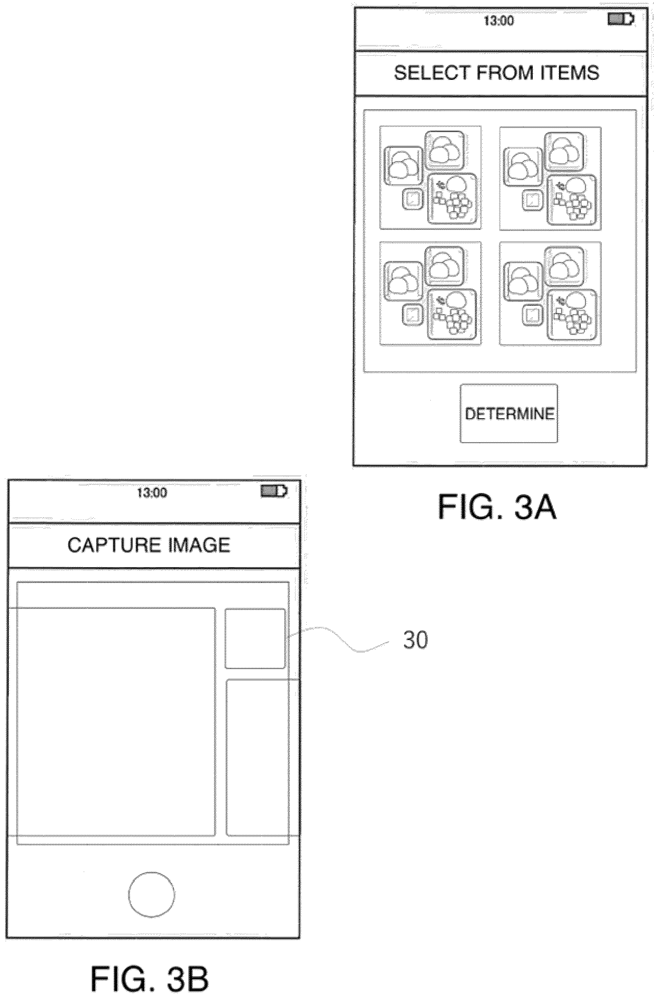

The arrangement generator 112 determines one or more candidates for the optimal arrangement of the one or more pieces of tableware on the basis of the arrangement table stored in the arrangement storage 122 from the one or more pieces of tableware to be used described in the selected tableware information including information on all of the one or more pieces of tableware, and, as shown in FIG. 3A, displays the determined one or more candidates for the optimal arrangement of the one or more pieces of tableware on the display 14.

The arrangement generator 112 accepts a selection from one or more candidates shown in FIG. 3A, and after the desired arrangement is selected by the user from one or more candidates shown in FIG. 3A, it generates data to display a guide for the selected arrangement on the display 14.

When the camera 15 is activated by the user, the image data obtained by the camera 15 is transmitted to the display 14, and the image captured by the camera 15 is displayed on the display 14. The arrangement generator 112 transmits the data of the guide for the selected arrangement to the display 14, which, as shown in FIG. 3B, displays the guide 30 for the selected arrangement on the image captured by the camera 15.

In FIG. 3A, the guide 30 is represented by a line showing the outline of the tableware as viewed from directly above, but the guide is not limited to lines; for example, the guide may be represented by a silhouette. In addition to these guides, the arrangement generator 112 may also display guides indicating horizontal and vertical on the display 14. Further, the arrangement generator 112 may generate data for displaying the guide on the display 14 each time when generating a guide for the selected arrangement, but it is not limited to this. For example, the data of an image with a transparent background other than the guide, which is created in advance and stored in a predetermined storage device, may be read out and used as the data for the guide.

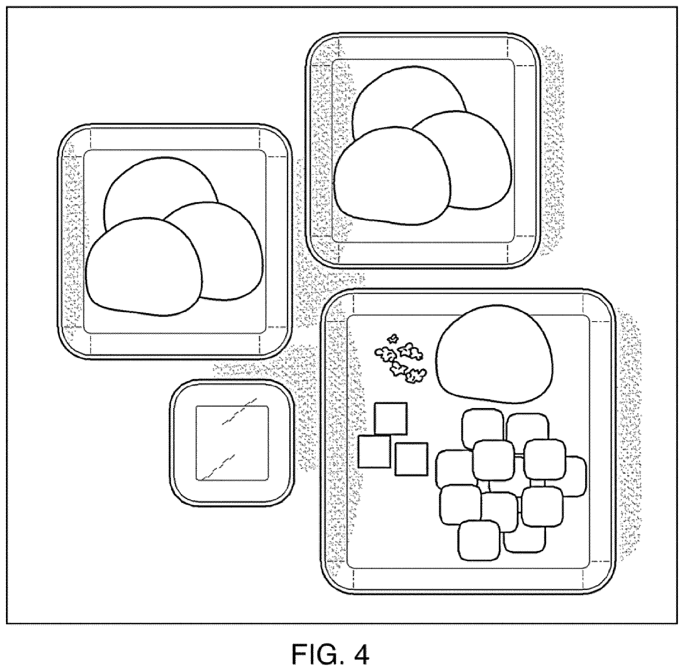

The user can arrange and image the pieces of tableware with food served on them so that they align with the guide 30, while checking the screen displayed on the display 14 for capturing by the camera 15. The user can easily image a beautiful food as shown in FIG. 4 by actually arranging the pieces of tableware in accordance with the optimal arrangement of the pieces of tableware displayed on the display 14 and capturing images of the tableware.

In this embodiment, images of the food shall be captured from directly above. This limits the shooting angle and facilitates the user to arrange the tableware along the guide generated by the arrangement generator 112. In addition, by imaging the food from directly above, only the food, tableware, and table are reflected in the capturing screen, reducing the number of factors that the user needs to consider when imaging, such as the background outside the table, for example, facilitating imaging.

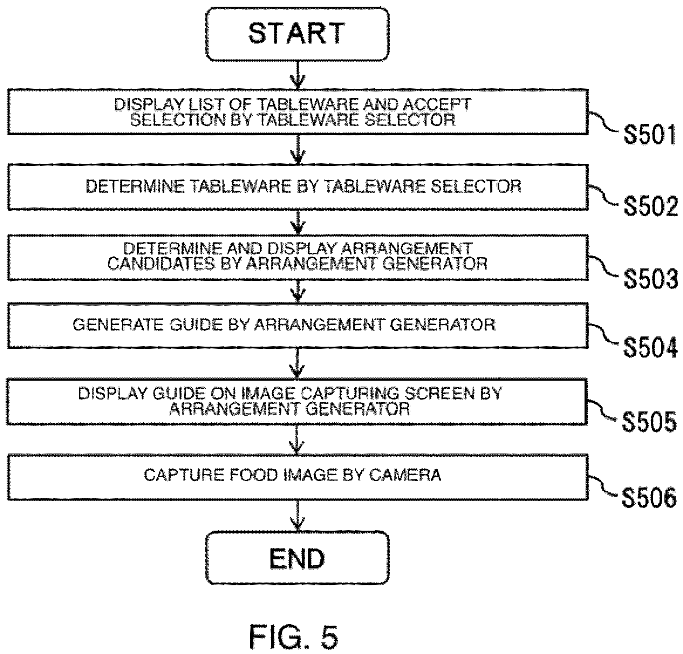

With reference to a flowchart in FIG. 5, the operation of the imaging device 10 will be described when the user arranges one or more pieces of tableware with food served on them and captures images using the imaging device 10.

In step S501, the tableware selector 111 displays a list of tableware listed in the tableware database stored in the tableware storage 121 on the display 14 and accepts selection of one or more tableware to be used from the list of tableware.

In step S502, the tableware selector 111 determines all of the one or more pieces of tableware to be used by the user by tapping the determination portion shown on the display 14 after accepting a selection from the list of tableware, and transmits the selected tableware information including information on all of the determined one or more tableware to be used to the arrangement generator 112.

In step S503, the arrangement generator 112 determines one or more candidates for the optimal arrangement of the one or more pieces of tableware on the basis of the arrangement table stored in the arrangement storage 122 from the one or more pieces of tableware to be used described in the selected tableware information including information on all of the one or more pieces of tableware, and displays the determined one or more candidates for the optimal arrangement of the one or more pieces of tableware on the display 14.

In step S504, the arrangement generator 112 accepts a selection from one or more candidates, and after the desired arrangement is selected by the user from one or more candidates, it generates a guide 30 for the determined arrangement.

In step S505, when the camera 15 is activated by the user, the arrangement generator 112 displays the guide 30 on the camera screen and within the screen captured by the camera 15.

In step S506, the camera 15 captures an image of the pieces of tableware with food served such that the pieces of tableware align with the guide 31.

In this embodiment, the CPU 11 may further include a composition selector 113. In step S501 shown in FIG. 5, rather than the tableware selector 111 displaying, on the display 14, a list of tableware described in the tableware database stored in the tableware storage 121 and accepting a selection of one or more pieces of tableware to be used from the list, the composition selector 113 may display, on the display 14, a list of all optimal arrangements of all combinations of all pieces of tableware stored in the tableware database as described in the arrangement table stored in the arrangement storage 122, and may accept a selection of an arrangement to be used.

When the composition selector 113 displays, on the display 14, a list of all optimal arrangements described in the arrangement table and accepts a selection of an arrangement to be used, or rather than accepting such a selection, the composition selector 113 may accept a selection of a situation in which the tableware is to be used and display, on the display 14, a list of arrangements narrowed down according to the selected situation of use of the tableware. Situations in which tableware is used may include, for example, the number of people using the tableware and the scene in which the tableware is used. Scenes in which tableware is used may include meals, tea time, and bar time, for example.

Further, the composition selector 113 may, when it displays, on the display 14, a list of all optimal arrangements described in the arrangement table and accepts a selection of an arrangement to be used, or rather than accepting the selection, accept a selection of the aspect ratio of an image obtained by imaging from among possible configurations and display, on the display 14, a list of configurations narrowed down on the basis of the selected aspect ratio of the image. Aspect ratios of images obtained by capturing may include, for example, square, image aspect ratio of 3:4, and image aspect ratio of 16:9.

In this embodiment, the CPU 11 may further include an arrangement adjuster (not shown). The arrangement adjuster is capable of adjusting the arrangement, i.e., position, and orientation, for example, of each tableware in the determined arrangement after the arrangement generator 112 accepts a selection from among one or more candidates for arrangement in step S504. The position, and orientation, for example, of each piece of tableware may be adjusted by, for example, selecting the desired piece of tableware and dragging it. After adjusting the arrangement of the pieces of tableware, the adjusted arrangement may be stored in the arrangement table.

Further, the arrangement adjuster may, after the composition selector 113 displays on the display 14 a list of all optimal arrangements described in the arrangement table and accepts a selection of an arrangement to be used, adjust the arrangement of each piece of tableware in the selected arrangement, namely positions, and orientations, for example. In this case, the adjusted arrangement may still be stored in the arrangement table.

In step S501 shown in FIG. 5, when displaying, within a capturing screen by the camera 15, the guide 31 selected by the user on the screen of the camera, the arrangement generator 112 may accept a request to display advice for capturing a more beautiful food image. For example, the arrangement generator 112 may display "View Advice" on the display 14 shown in FIG. 3B, and when the user taps on the "View Advice" area, the display 14 may display advice for capturing a beautiful food image. The advice may include, for example, "Place the vessels in accordance with the displayed outline," "Lighting should be from an angle," "If the edge of the table is reflected, zoom in and out to be out of sight as possible."

In this embodiment, the CPU 11 may further include a tableware database editor 114. In step S501 shown in FIG. 5, rather than the tableware selector 111 displaying, on the display 14, a list of tableware described in the tableware database stored in the tableware storage 121 and accepting a selection of one or more pieces of tableware to be used from the list, the tableware database editor 114 may accept user input and allow editing of the tableware database stored in the tableware storage 121 of the imaging device, such as changing the number of pieces of tableware described in the tableware database or newly adding tableware.

In this embodiment, the CPU 11 may further include an image editor (not shown) having a phase processor that performs phase processing and a color filter processor that performs color filter processing on the image captured and obtained by the camera 15 in step S506 shown in FIG. 5.

### Second Embodiment

Tableware for serving food is deep enough to hold food, and different types of tableware may have different sizes and depths. For example, flat plates are relatively small in depth and usually small in height. Deep plates, and cups, for example, have a greater depth and thus a greater height than flat plates.

The imaging device according to the present embodiment is capable of more easily capturing beautiful food images by using pieces of tableware of the same height as those listed in the tableware database stored in the tableware storage 121. In the present embodiment, as described below, for example, heights of tableware including cups are consistent by increasing the height of a raised platform of relatively low tableware such as flat plates. However, by excluding relatively tall tableware such as cups, the heights of the tableware may be consistent without increasing the height of the raised platform.

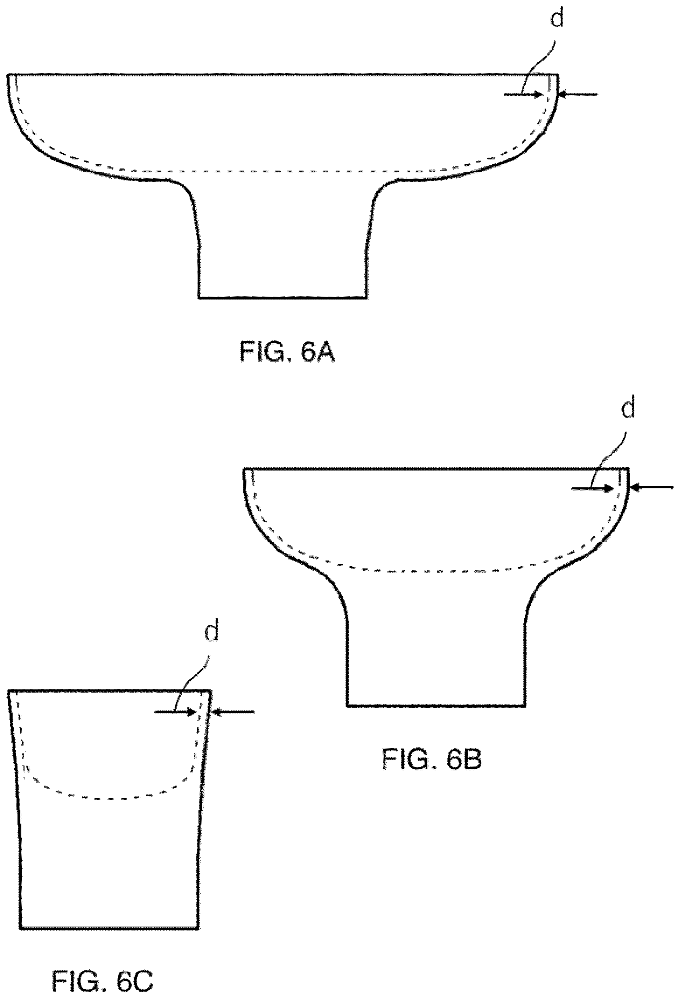

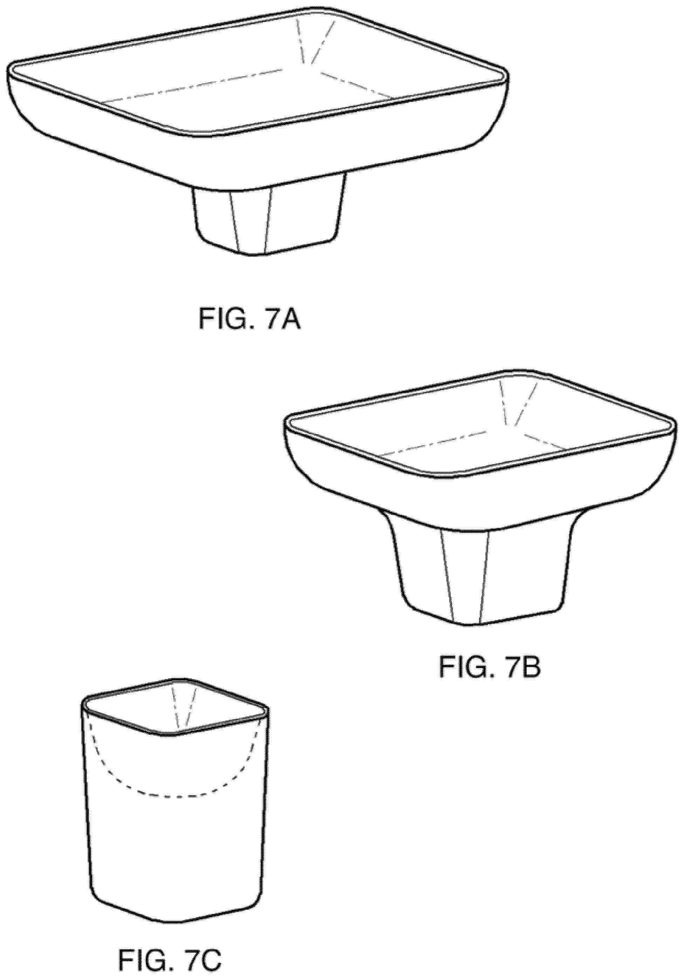

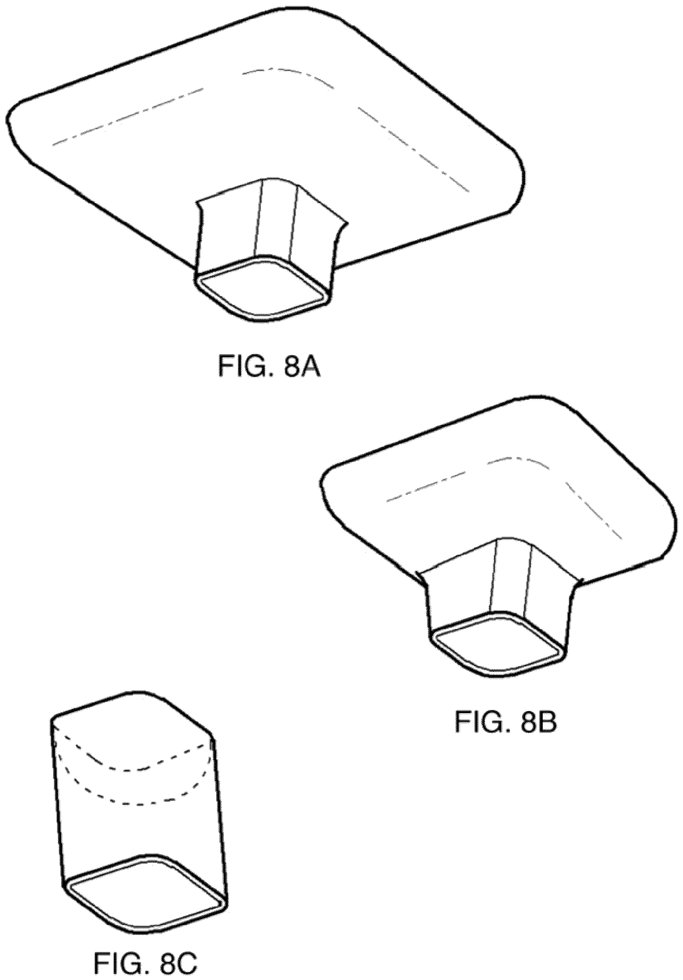

FIGS. 6A to 6C each show a front cross-sectional view of an example of tableware used in the present embodiment. Assume that FIG. 6A shows a large plate, FIG. 6B shows a small plate, and FIG. 6C shows a cup. In FIGS. 6A to 6C, cross-sections of inner bottom surfaces of the tableware for containing food and beverages are indicated by broken lines. FIGS. 7A to 7C each show a perspective view from above of the tableware illustrated in corresponding one of FIGS. 6A to 6C, and FIGS. 8A to 8C each show a perspective view from below of the tableware illustrated in corresponding one of FIGS. 6A to 6C.

The pieces of tableware shown in FIGS. 6A to 8C all have the same height with each other. Both the large plate in FIG. 6A and the small plate in FIG. 6B have higher raised platforms.

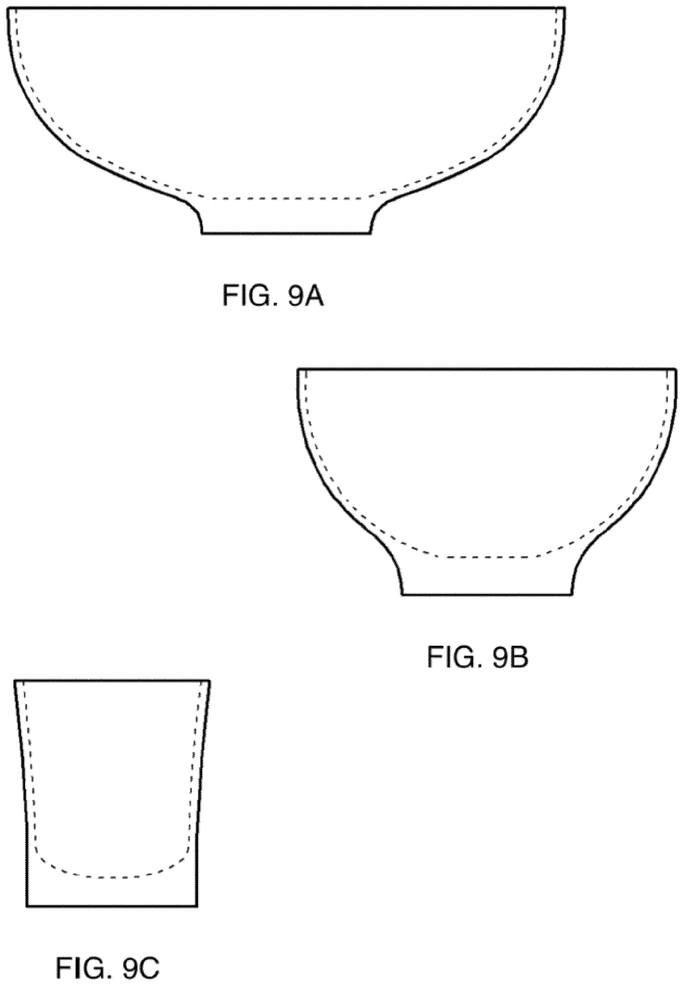

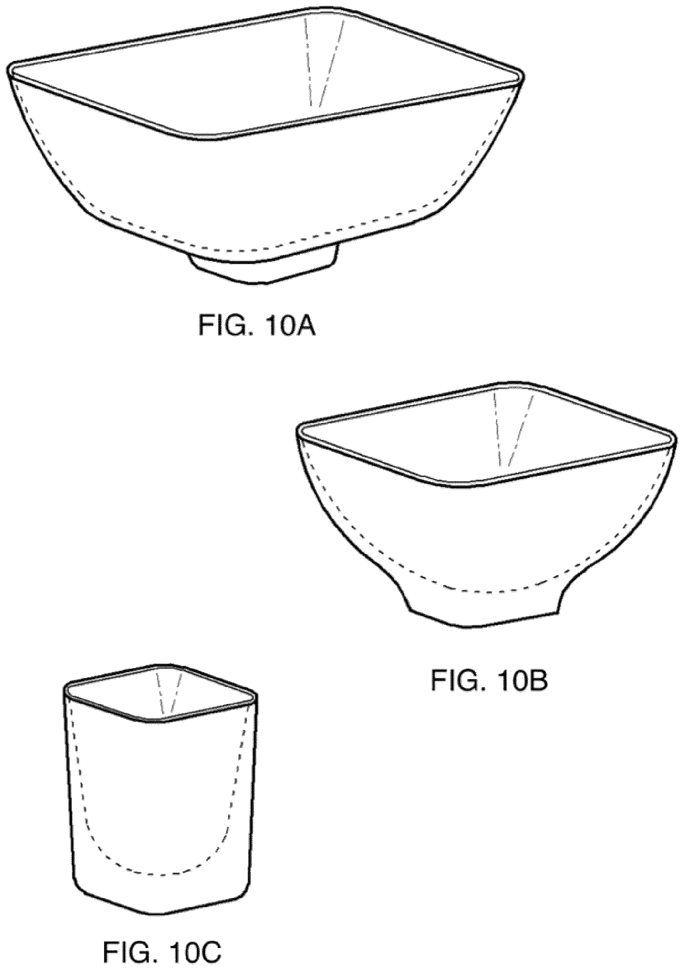

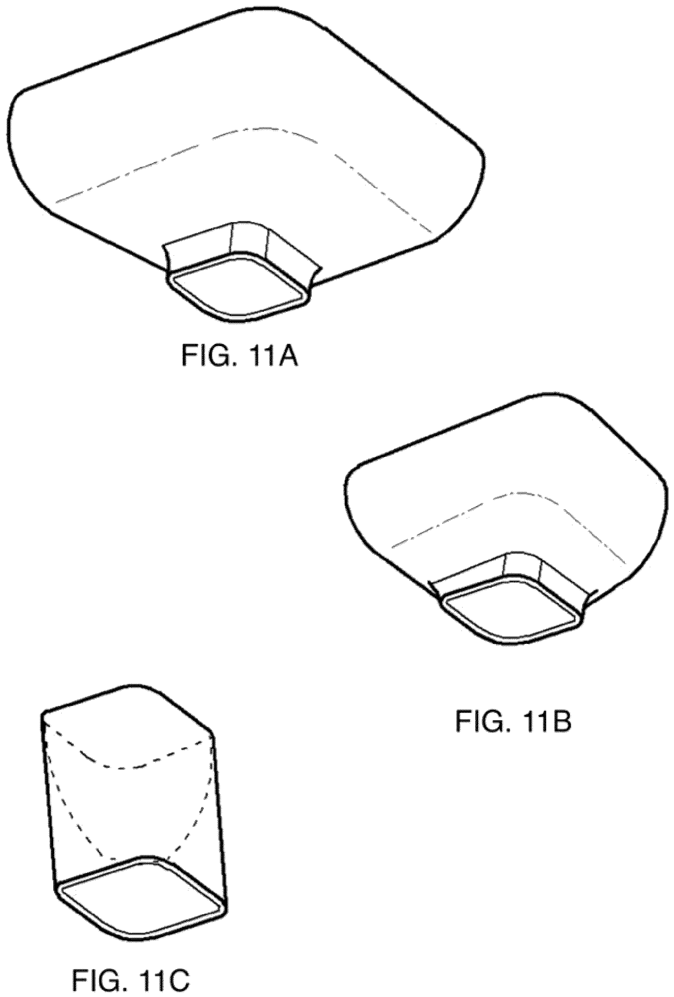

FIGS. 9A to 9C show front cross-sectional views of a general large plate, a small plate, and a cup for comparison. FIGS. 10A to 10C each show a perspective view from above of the tableware illustrated in corresponding one of FIGS. 9A to 9C, and FIGS. 11A to 11C each show a perspective view from below of the tableware illustrated in corresponding one of FIGS. 9A to 9C. Assume that both the large plate of FIG. 9A and the small plate of FIG. 9B have respective raised platforms that are smaller than the raised platform of the large plate illustrated in FIG. 6A and the raised platform of the small plate illustrated in FIG. 6B, and are assumed to have a general height. The large plate in FIG. 9A, the small plate in FIG. 9B, and the cup in FIG. 9C all have the same height as the pieces of tableware shown in FIGS. 6A to 6C, and the inner depth of the pieces of tableware shown in FIGS. 9A to 9C are all greater than the inner depth of the pieces of tableware shown in FIGS. 6A to 6C.

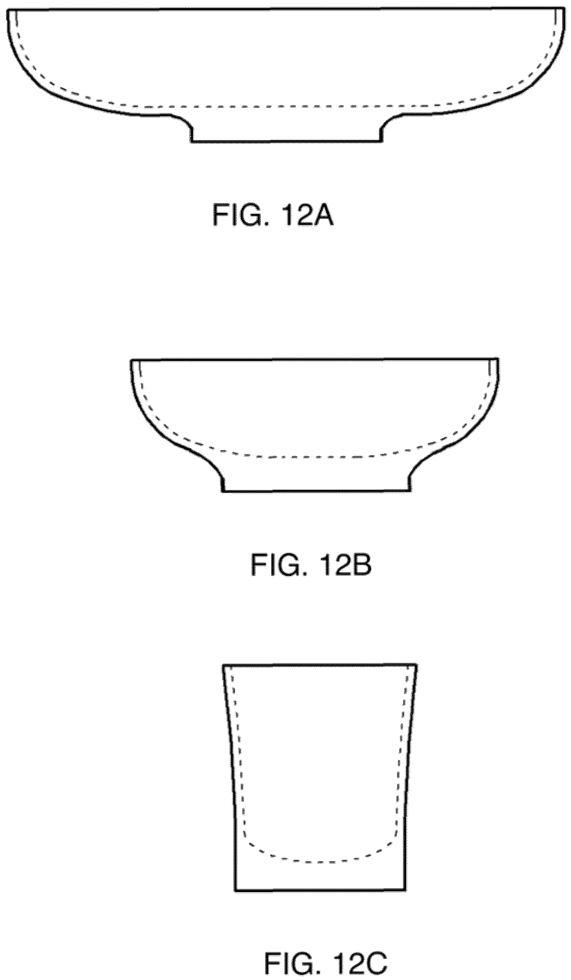

FIGS. 12A and 12B show, for further comparison, front cross-sectional views of a typical large plat and small plate, which are different from the tableware shown in FIGS. 9A and 9B, respectively. The flat plate in FIG. 12A and the flat plate in FIG. 12B are both assumed, in the same manner as in the tableware shown in FIGS. 9A and 9B, to have raised platforms that are smaller than the raised platform of the large plate shown in FIG. 6A and the raised platform of the small plate shown in FIG. 6B, respectively, and to have general heights. The flat plates in FIG. 12A and FIG. 12B have both the same depth as that of the pieces of tableware shown in FIGS. 6A to 6C, and all the heights of the pieces of tableware shown in FIGS. 12A to 12C are smaller than the heights of the corresponding pieces of tableware shown in FIGS. 6A to 6C, respectively.

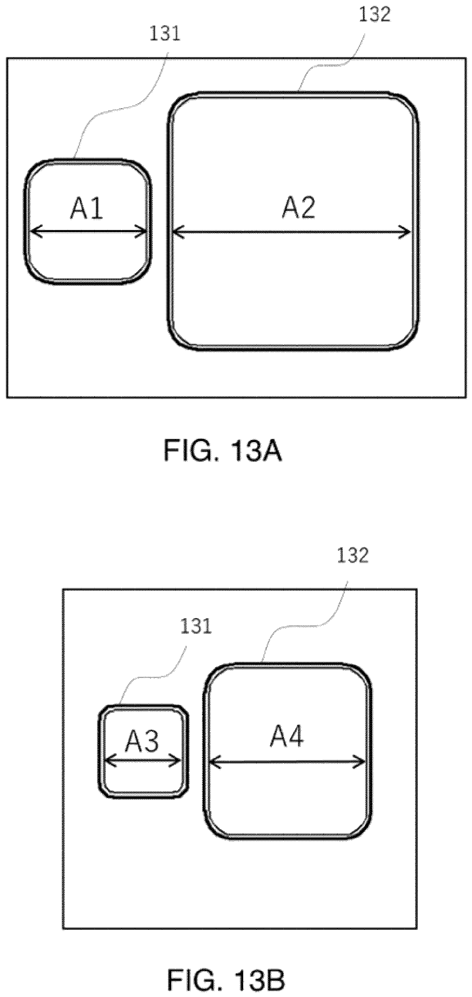

FIG. 13A to 13C each show an example of the arrangement of the pieces of tableware shown in corresponding one of FIGS. 6A to 6C, 7A to 7C, and 8A to 8C. Each example shown in FIGS. 13A to 13C shows a schematic diagram of an image captured from directly above with the pieces of tableware shown in corresponding one of FIGS. 6A to 6C, 7A to 7C, and 8A to 8Carranged. The pieces of tableware 131 and 132 shown in FIGS. 13A to 13C have the same height with each other. As an example, the width A1 of the tableware 131 is assumed to be twice as great as the width A2 of the tableware 132.

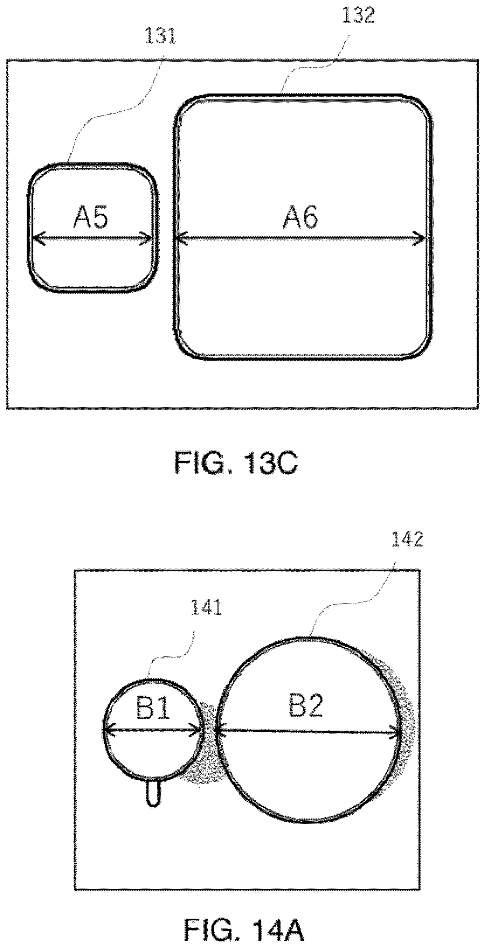

FIG. 13A shows a schematic diagram of pieces of tableware 131 and 132 captured from directly above at height H1. The width ratio between the tableware 131 and tableware 132 in the image at this time is 1:2.019. FIG. 13B shows a schematic view at the height H1, showing a case, in comparison to that of FIG. 13A, where the image is captured with a wide shot, that is, with the zoom lens of the camera 15 moved toward the wide-angle side. The ratio of widths A3 and A4 of the tableware 131 and tableware 132 in the image at this time is 1:1999. FIG. 13C shows a schematic diagram illustrating an image captured with a zoom at height H1, in comparison to the case shown in FIG. 13A. The ratio of widths A5 and A6 of the tableware 131 and tableware 132 in the image at this time is 1:2.021. Accordingly, in the case where the heights of multiple pieces of tableware are the same with each other, when the image is captured from directly above, the widths of the pieces of tableware in the image changes less, even though the image is captured with a wide shot, or zoomed.

FIG. 14A to 14C each show an example of the arrangement of the pieces of tableware shown in corresponding one of FIGS. 12A to 12C. Each example shown in FIGS. 14A to 14C shows a schematic diagram of an image captured from directly above with the pieces of tableware shown in corresponding one of FIGS. 12A to 12C arranged. The tableware 141 shown in FIGS. 14A to 14C is a cup with a handle, and the tableware 142 is a flat plage as shown in FIG. 12A with the height of the tableware 142 being lower than the height of the tableware 141. As an example, the ratio of the width B1 of the tableware 141 to the width B2 of the tableware 142 is assumed to be 9:20.

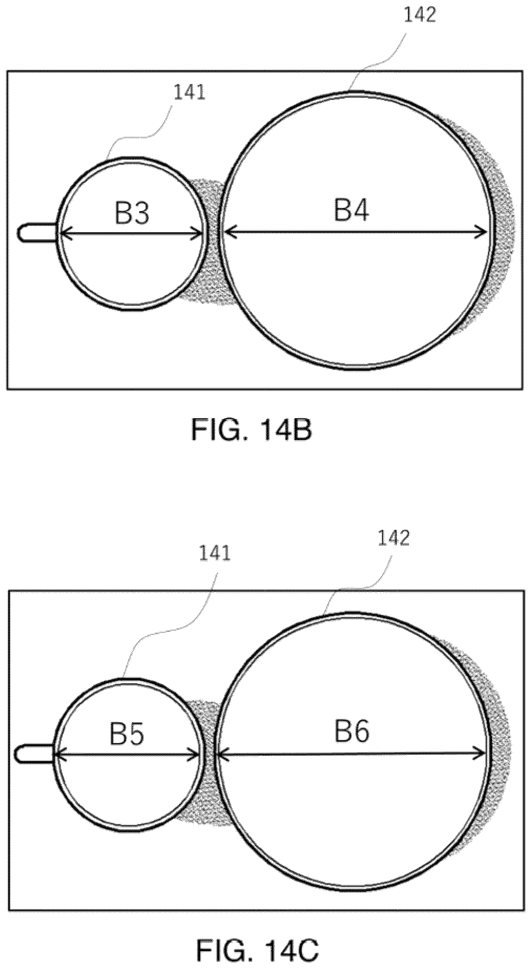

FIG. 14A shows a schematic diagram of pieces of tableware 141 and 142 captured from directly above at height H2. The wide shot is imaged so that the ratio of the widths of the pieces of tableware 141 and 142 in the image is the same as the actual width ratio B1:B2 = 9:20 = 1:2.222. FIG. 14B shows a schematic diagram at the height H2, illustrating a case where the image is captured when the position of the zoom lens of the camera 15 is the same as that in FIG. 14A. The ratio of the widths of the tableware 141 and 142 in the image is B3:B4 = 1:1.796. FIG. 14C shows a schematic diagram of an image with a zoom at the height H2 in comparison to the case shown in FIG. 14B. The ratio of the widths of the pieces of tableware 141 and 142 in the image is B5:B6 = 1:1.974. As described above, in a case where the heights of multiple pieces of tableware are not the same, when an image is captured from directly above, with a wide shot, or a zoom, the width of the tableware in the image varies greatly.

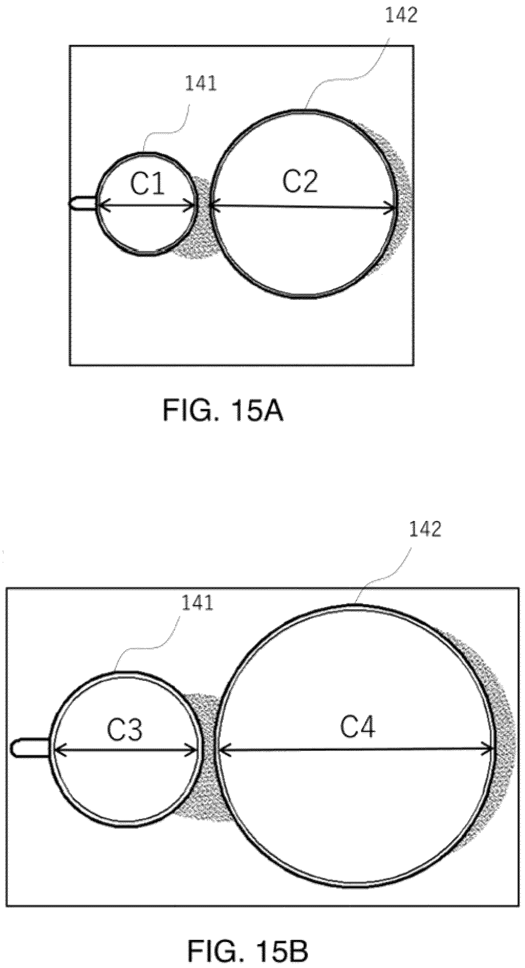

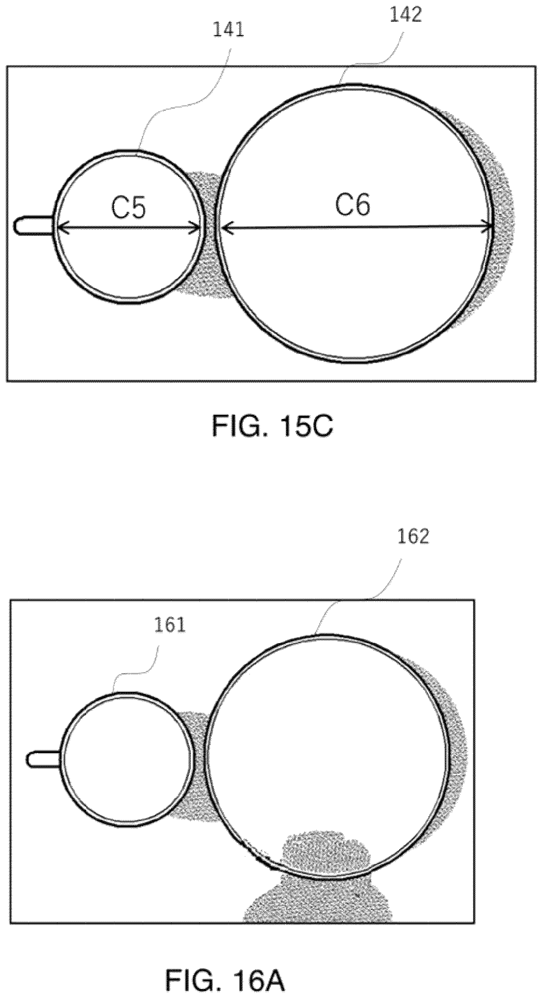

FIGS. 15A to 15C each show a schematic diagram of an image captured from directly above with the same tableware shown in FIGS. 14A to 14C and the same angle of view, but at different heights from the table. FIGS. 15A, 15B, and 15C show schematic diagrams of the pieces of tableware 141 and 142 captured from directly above them at heights H3, H4, and H5, respectively. However, H3 > H4 > H5. The width ratios C1:C2, C3:C4, and C5:C6 of tableware 141 and tableware 142 in the images shown in FIGS. 15A, 15B, and 15C correspond to 1:1.921, 1:1.824, and 1:1.786, respectively. As described above, in a case where the heights of multiple pieces of tableware are not the same, even when an image is captured from directly above with the same angle of view, the width of the tableware in the image varies greatly depending on the height of the camera 15 above the table.

As described above, in the present embodiment, when an image is captured using multiple pieces of tableware, if the heights of the pieces of tableware are the same, the size of the tableware in the image changes less independent of the distance from the table when the image is captured from directly above the arranged tableware, or independent of the wide shot or zoom of the camera 15 used. This provides a guidance with the guide, and further, even when the distance from the table or the wide shot or zoom of the camera 15 used is changed, the balance, composition, and overall image of the arranged tableware, for example, do not change.

As shown in FIGS. 14A through 15C, in a case where an image is captured using multiple pieces of tableware, if the heights of the pieces of tableware are not the same with each other, the shadow of the tableware falls on an adjacent piece of tableware.

In a case where the lighting is directed from directly above during imaging to prevent the shadow of one piece of tableware from being cast onto an adjacent piece of tableware, if the imaging is performed from directly above the table on which the pieces of tableware are set, the shadow of the photographer appears within the image shooting area as shown in FIG. 16A. When imaging is performed at an angle to the table on which the pieces of tableware are set to prevent the reflection of the shadow of the photographer, the background appears within the image shooting area so that it may be hard to create a picture for the capturing.

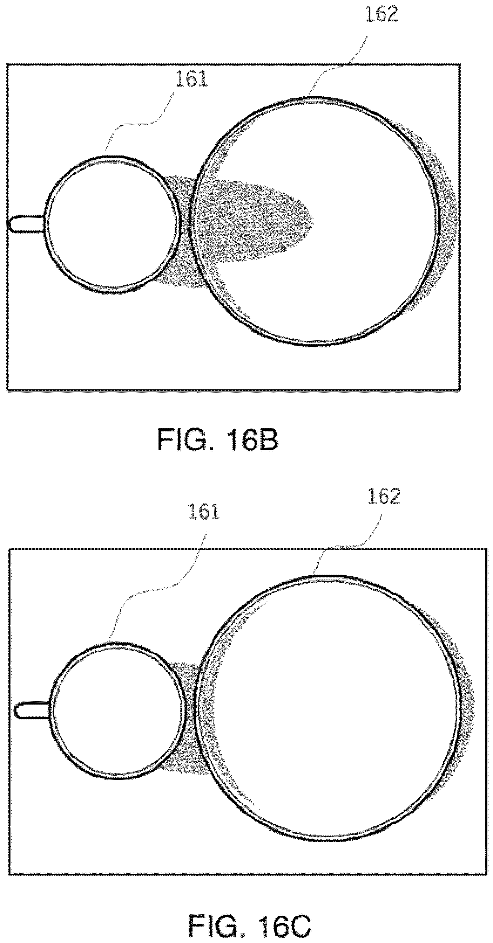

In FIG. 16C, the tableware 161 and tableware 162 are lifted and imaged so that they are at the same distance from the camera 15. The shadow of the tableware 161 can be captured without falling on the tableware 162 as shown in FIG. 16B.

In the tableware recorded in the tableware database stored in the tableware storage 121 of the imaging device according to the present embodiment, the thickness d may be set consistent as shown in FIG. 5. The thickness d of the rim of each of the multiple pieces of tableware used is set to the same, allowing a more beautiful food image to be captured.

In general, tableware varies in thickness depending on type, size, and design, for example. Typically, because of the need for strength, the greater the size of the tableware, the thicker the rim is designed to be, and the smaller the size, the thinner the rim is designed to be. In a case where food is imaged using multiple pieces of tableware, if the thickness of the rims of the pieces of tableware differs from each other, it may spoil the aesthetics, for example, a sense of consistency or cohesiveness may not be achieved.

As shown in FIGS. 6A to 6C, when the thickness d of the rims of the multiple pieces of tableware used is the same, a sense of consistency can be achieved even when pieces of tableware of different sizes are captured in a single image, allowing a beautiful food image to be captured.

In the tableware described in the tableware database stored in the tableware storage 121 of the imaging device according to the present embodiment, the slope angle θ of the sides of the tableware may be set greater than a predetermined value as shown in FIG. 5. The slope of the sides of general tableware may be provided as a "draft angle," a "slope for ease of handling," or a "slope for design." However, in the present embodiment, the slope angle θ of the sides of the tableware is provided such that the sides of the tableware are less visible during imaging. The slope θ of the sides of each of the multiple pieces of tableware is set greater than a predetermined value, the sides of the pieces of tableware are less visible, allowing beautiful food images to be captured.

The imaging device according to the present embodiment may include, in the tableware described in the tableware database stored in the tableware storage 121, tableware having, when viewed from directly above, an outline that has at least one of an arc with a central angle greater than or equal to a predetermined value, or at least one straight line. This facilitates the alignment of the tableware with the arrangement guides generated by the arrangement generator 112.

The imaging device according to the present embodiment may include, in the tableware described in the tableware database stored in the tableware storage 121, tableware having, when viewed from directly above, an outline that has at least one of square or rectangle with a ratio of lengths of the vertical and horizontal sides of 1:2, 1:3, or 2:3, an arc with a central angle greater than or equal to a predetermined value, or at least one straight line. This guides the arrangement of the image in accordance with traditional image capturing techniques on the basis of the grid that is displayed when the image is captured in a square shape.

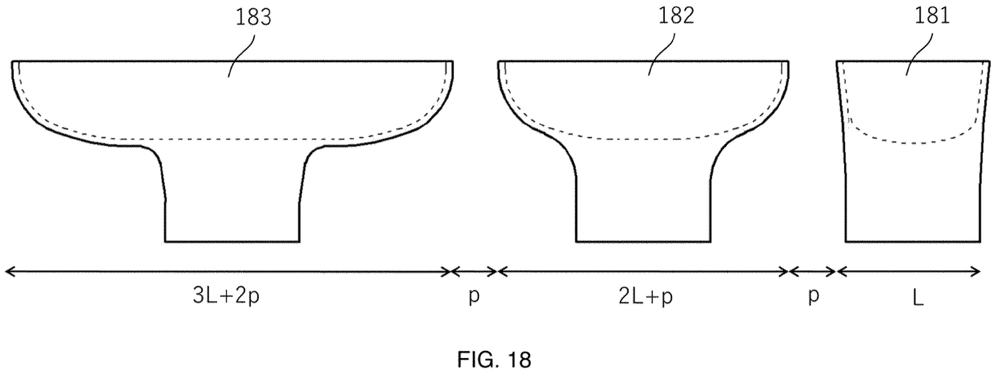

In the tableware described in the tableware database stored in the tableware storage 121 in the imaging device according to the present embodiment, in a case where an image is captured using multiple pieces of tableware, if the length of the space provided between adjacent pieces of tableware is defined as P, and the length of the side or diameter of the piece of tableware having the smallest side length or diameter among the multiple pieces of tableware is defined as x, then the length of each side or diameter of the multiple pieces of tableware may be n × x + P (n - 1) (where n is an integer greater than or equal to 1 and P is greater than or equal to 0). With reference to FIGS. 18 through 22, details thereof will be described.

FIG. 18 shows, as an example, a front view of three pieces of tableware. The width L of tableware 181 is assumed to be the smallest width among pieces of tableware 181 to 183. The length of space between the pieces of tableware when capturing an image using the pieces of tableware shown in FIG. 18 is set as p. The width of the tableware 182 is set as 2L + p, which is twice the width of the tableware 181 plus the length of the space. The width of the tableware 183 is set as 3L + 2p, which is three times the width of the tableware 181 plus twice the length of the space. Using these pieces of tableware facilitates alignment of multiple pieces of tableware with the arrangement guides generated by the arrangement generator 112, allowing an image with a sense of consistency to be captured.

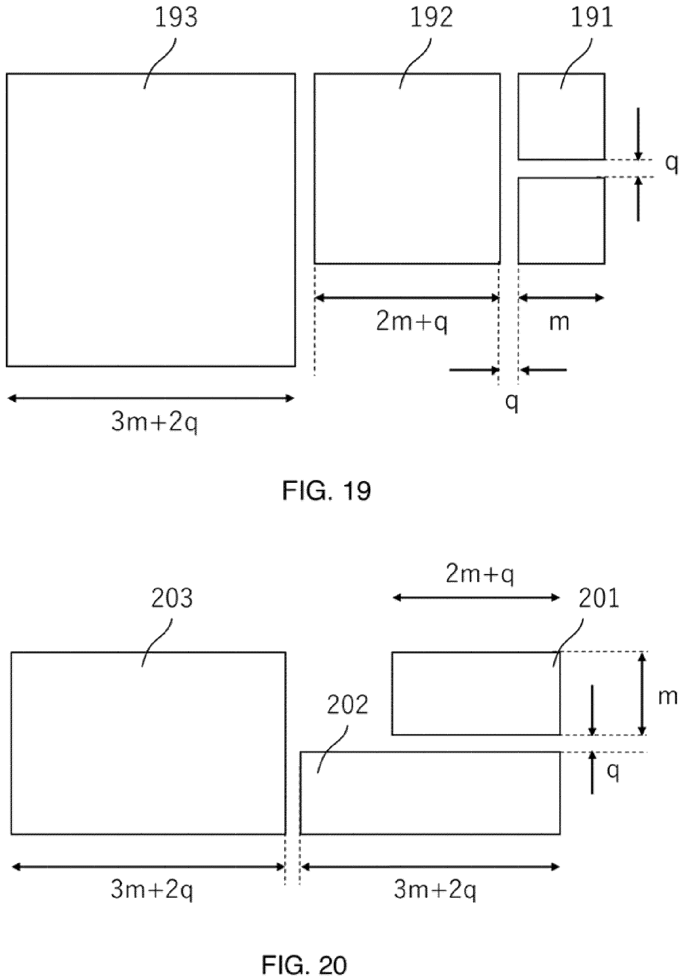

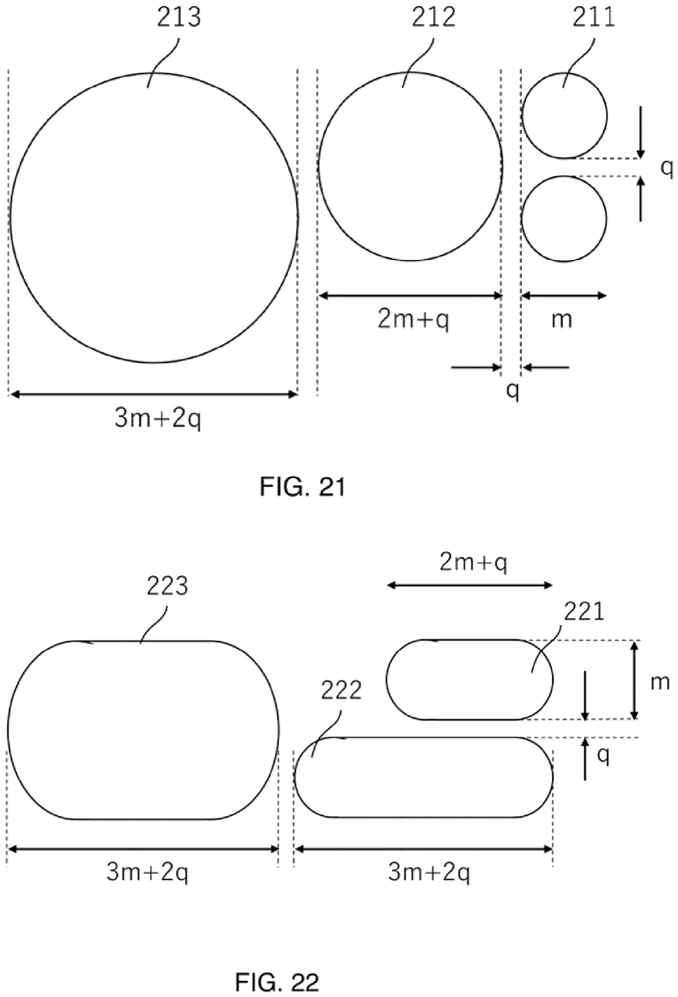

FIGS. 19 through 22 show top views of the outlines of multiple pieces of tableware when the pieces of tableware are arranged. FIG. 19 shows square tableware, FIG. 20 shows rectangular tableware, FIG. 21 shows circular tableware, and FIG. 22 shows capsule-shaped (i.e., a rectangle with semicircular ends) tableware. All the widths of spaces between the pieces of tableware in FIGS. 19 through 22 are set as q.

The pieces of tableware shown in FIG. 19 are all square, and the length of the sides of the smallest tableware 191 is m. The length of the sides of the tableware 192 is 2m + q. The length of the sides of the tableware 193 is 3m × 2q.

The pieces of tableware shown in FIG. 20 are all rectangular. The length of the smaller side of the smallest tableware 201 is set as m, the same as that of the square shown in FIG. 19. The length of the larger side of the tableware 201 is 2m + q. The length of the smaller side of the tableware 202 is m, and the length of the larger side is 3m + 2q. The length of the smaller side of the tableware 203 is 2m × q, and the length of the larger side is 3m + 2q.

The pieces of tableware shown in FIG. 21 are all circular, and the length of the diameter of the smallest tableware 211 is set as m, the same as the length of the sides of the square shown in FIG. 19. The length of the diameter of the tableware 212 is 2m + q. The length of the diameter of the tableware 213 is 3m × 2q.

The pieces of tableware shown in FIG. 22 are all capsule-shaped, and the length of the diameter of the smallest tableware 211 is set as m, the same as the length of the side of the square shown in FIG. 19. The length of the maximum width of the capsule-shape of the tableware 221 is 2m + q. The length of the diameter of the tableware 222 is m, and the length of the maximum width of the capsule-shape is 3m × 2q. The length of the diameter of the tableware 223 is 2m + q, and the length of the maximum width of the capsule-shape is 3m × 2q.

The tableware shown in FIGS. 19 through 22 allows multiple pieces of tableware to be arranged in an orderly manner if the space between them is of a predetermined size (q in FIGS. 19 through 22). Further, this facilitates the alignment of the tableware with the arrangement guides generated by the arrangement generator 112. Moreover, this guides the arrangement of the image in accordance with traditional image capturing techniques on the basis of the grid that is displayed when the image is captured in a square shape.

Although the tableware shown in FIGS. 19 through 22 have different shapes (square, rectangle, circle, and capsule-shape, respectively), the length of both the smallest side and the diameter of the circle is set the same size (m in FIGS. 19 through 22), achieving the advantageous effects described above, such as allowing multiple pieces of tableware in an orderly manner even if they have different shapes, for example.

The size of the space between multiple pieces of tableware (q in FIGS. 19 through 22) may be any value, and the pieces of tableware may be arranged without gaps between them, i.e., the size of the space may be 0 (q = 0 in FIGS. 19 through 22).

The tableware shown in FIGS. 19 through 22 are square, rectangular, circular, and capsule-shape, respectively, but are not limited to these shapes, and if the length of the side or diameter of the tableware with the smallest length or diameter among multiple pieces of tableware is set x, for example, the maximum width length of any other shape or any tableware that has an irregular shape, may be n × x + P (n-1) times.

The imaging device according to the present embodiment is capable of providing the following advantages by guiding the arrangement in accordance with traditional image capturing techniques as described above. First, the device allows the user to learn compositions and arrangements. In addition, even in imaging methods to which the present system cannot be applied, such as those using a single-lens reflex camera, a grid can be displayed within the viewfinder in most cases, which grid is used as a reference, facilitating creation of a well-balanced composition since the consistent height ensures that the relative sizes of the tableware do not change independent of the aspect ratio of 1:2:3:4:5, the angle of view, or the distance. Further, in the image capturing method using this system, even users with photographic skills can freely arrange the composition since it is directed to an image capturing guide system created on the basis of an arrangement in accordance with traditional image capturing techniques.

### Third Embodiment

The imaging device according to the present embodiment is capable of capturing more aesthetically pleasing food images by using tableware described in the tableware database stored in the tableware storage 121, in which designs of corners and rims of the tableware are consistent. By unifying designs of corners and rims of the tableware, even in an image in which a portion of the tableware is enlarged rather than capturing the entire pieces of tableware, a sense of consistency is created since designs of adjacent pieces of tableware are consistent, allowing a beautiful image to be captured.

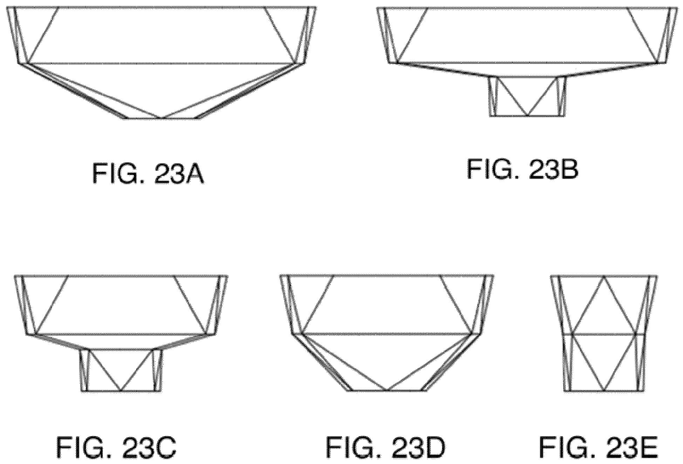

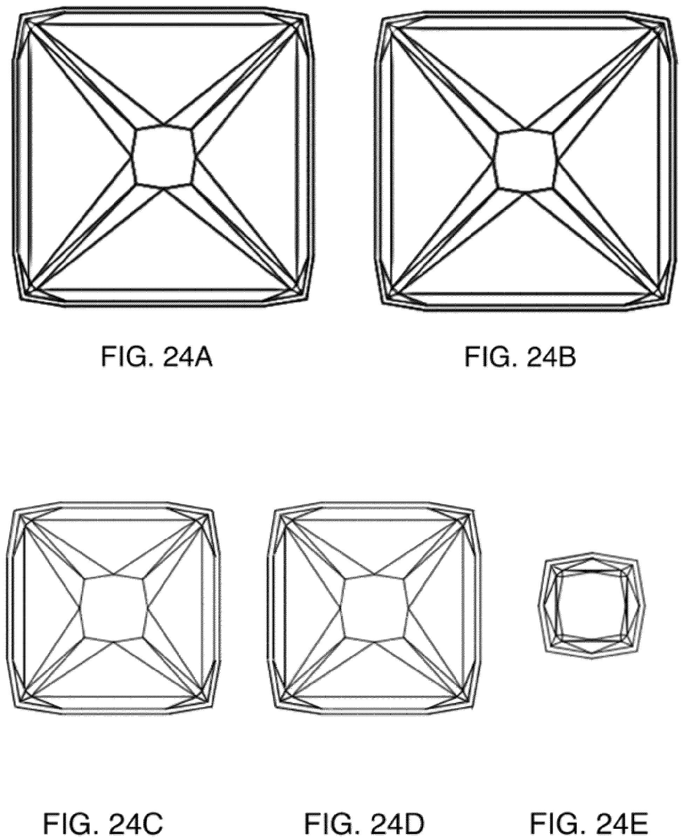

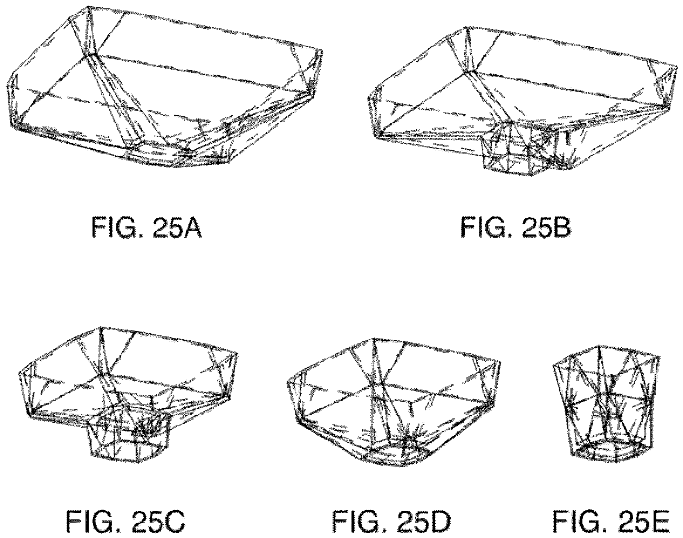

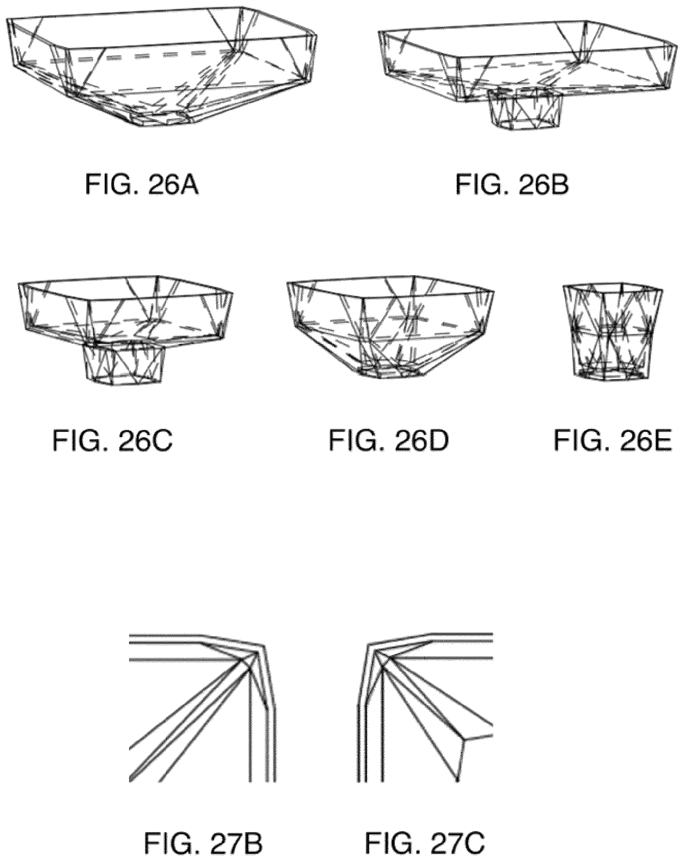

FIGS. 23A to 23E each show a side view of an example of tableware used in the present embodiment. FIGS. 24A to 24E each show a top view of each of the pieces of tableware shown in corresponding one of FIGS. 23A to 23E. FIGS. 25A to 25E each show a perspective view of each of the pieces of tableware shown in corresponding one of FIGS. 23A to 23E viewed from below. FIGS. 26A to 26E each show a perspective view of each of the pieces of tableware shown in corresponding one of FIGS. 23A to 23E viewed from above.

FIGS. 23A, 24A, 25A, and 26A each show a large plate without a raised platform; FIGS. 23B, 24B, 25B, and 26B each show a large plate with a raised platform; FIGS. 23C, 24C, 25C, and 26C each show a small plate with a raised platform; FIGS. 23D, 24D, 25D, and 26D each show a small plate with a raised platform; and FIGS. 23E, 24E, 25E, and 26E each show a cup.

FIGS. 27B and 27C show, as an example, a partially enlarged view of corresponding FIGS. 24B and 24C. Although the tableware of FIG. 24B and FIG. 24C differ in size, since designs of corners and rims such as corner angles and rim thicknesses are consistent, even in the images in which a portion of the tableware is enlarged as in FIGS. 27B and 27C, a beautiful image with a sense of consistency may be captured.

The diameter and shape of the raised platforms in FIGS. 23A, 25A, 26A and 23D, 25D, 26D, 23B, 25B, 26B and 23C, 25C, 26C are consistent. This allows the same items to be used, such as additional accessories such as a handle, a diagram indicating an arrangement, a tray having a recess, a tablecloth, or a mat.

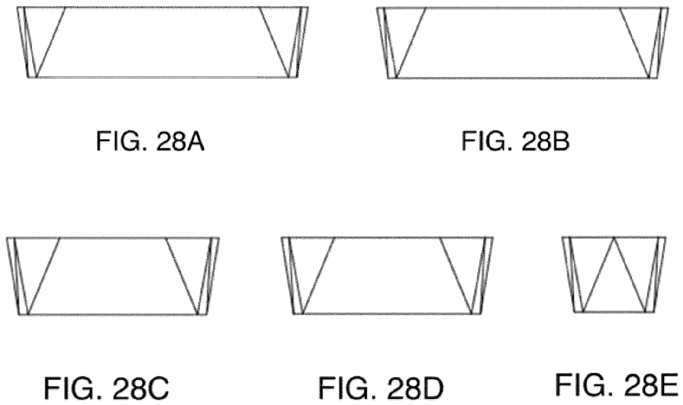

FIG. 28A to 28E each show a side view of the tableware shown in corresponding one of FIGS. 24A to 24E without the raised platform. The shapes of respective bottom surfaces of the tableware shown in FIGS. 23A to 23E are consistent, as in a case where the diameters and shapes of respective raised platforms of the tableware are consistent, allowing the same items to be used as additional accessories such as a handle, a diagram indicating an arrangement, a tray having a recess, a tablecloth, or a mat.

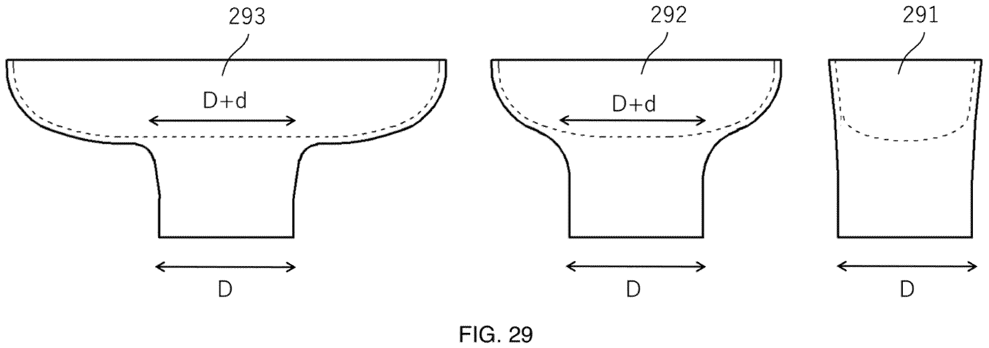

The imaging device according to the present embodiment may include, in the tableware database stored in the tableware storage 121, tableware in which, for unifying designs of stacking (stacking multiple plates) and auxiliary parts such as sauce plates, a bottom surface of a plate larger than a predetermined size has a dimension and shape capable of receiving a raised platform of another piece of tableware. With reference to FIGS. 29 through 32, details thereof will be described.

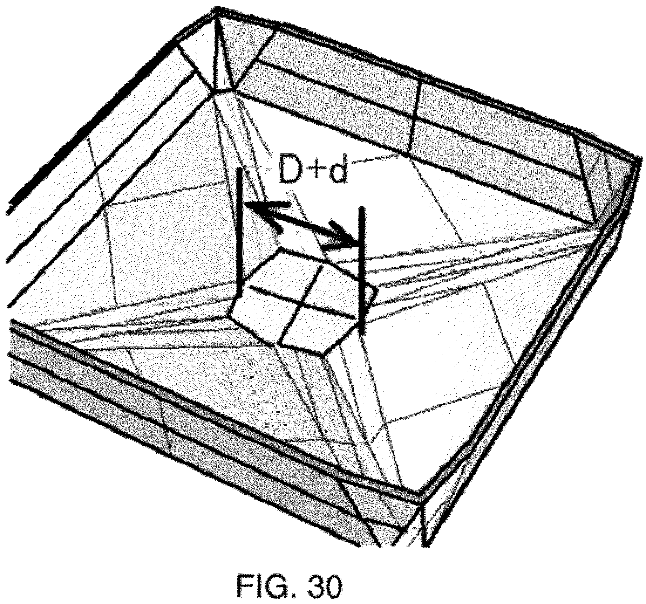

FIG. 29 shows, as an example, the front view of three pieces of tableware. Assuming that the width of the raised platforms of the tableware 291 to 293 is D, and the width of the bottom surfaces of the tableware 291 and 292 is D + d. The bottom surface of the tableware 291 is flattened by a width of D + d, allowing the raised platforms of the tableware 292 and 293 to be placed thereon in a stable state. FIG. 30 shows a diagram of the tableware illustrated in FIG. 23B as viewed from an obliquely upper side.

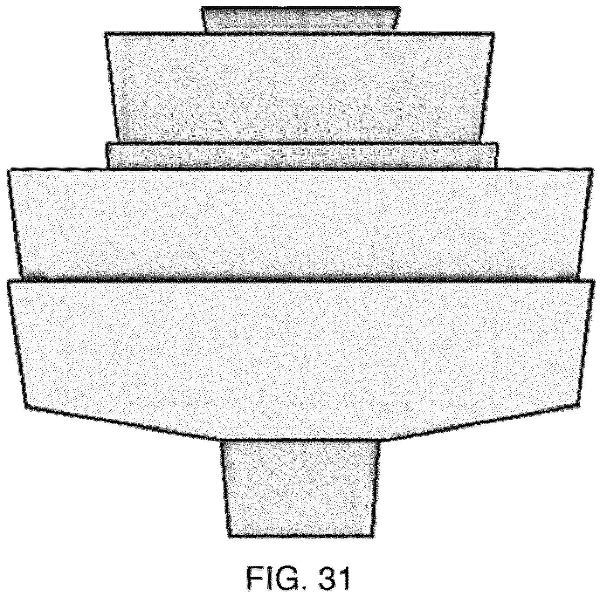

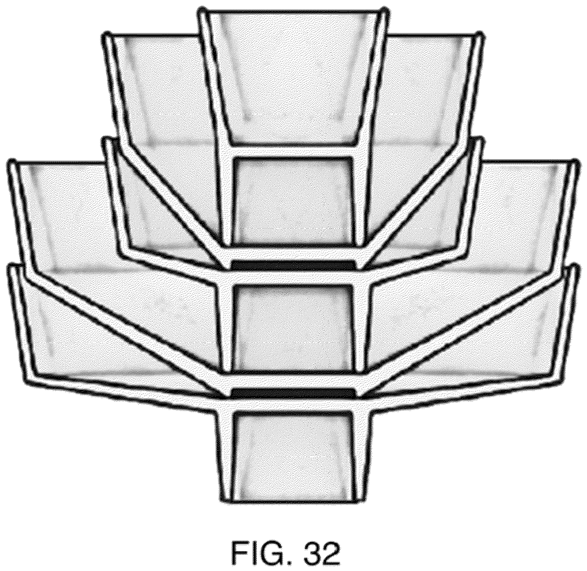

FIGS. 31 and 32 show a state in which pieces of tableware are stacked, in which bottom surfaces of plates larger than a predetermined size have dimensions and shapes capable of receiving raised platforms of other pieces of tableware. FIG. 31 shows a front view, and FIG. 32 shows a front cross-sectional view, both illustrating five pieces of tableware stacked. When the pieces of tableware are stacked, a bottom surface of another piece of tableware on which a raised platform of the tableware is placed is flat, and the raised platform of the tableware can be placed thereon in a stable state.

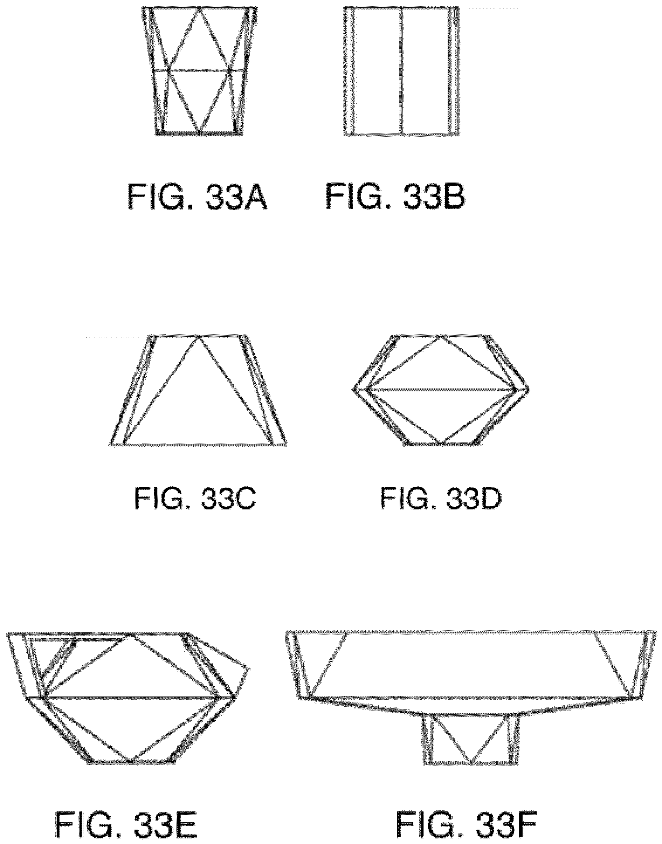

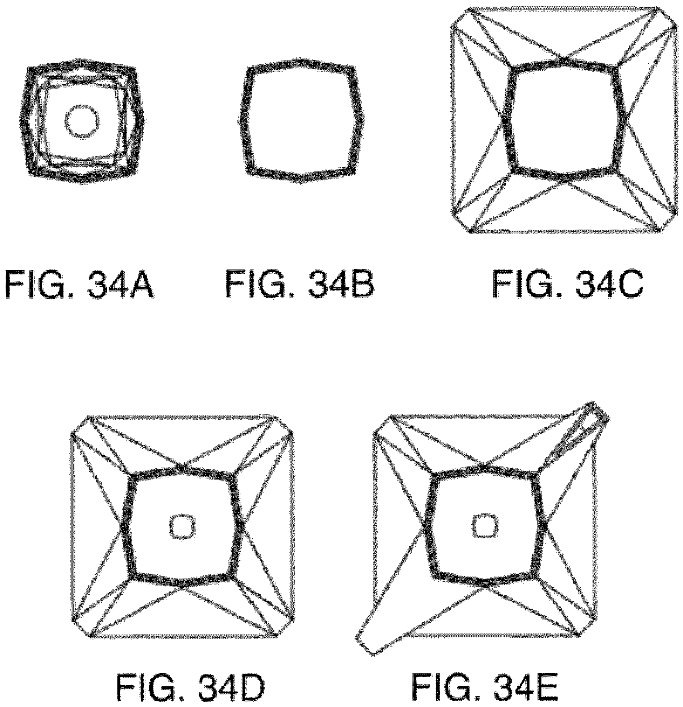

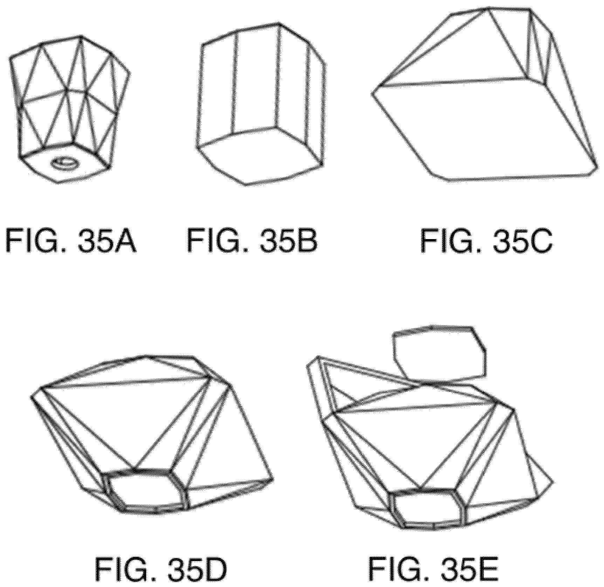

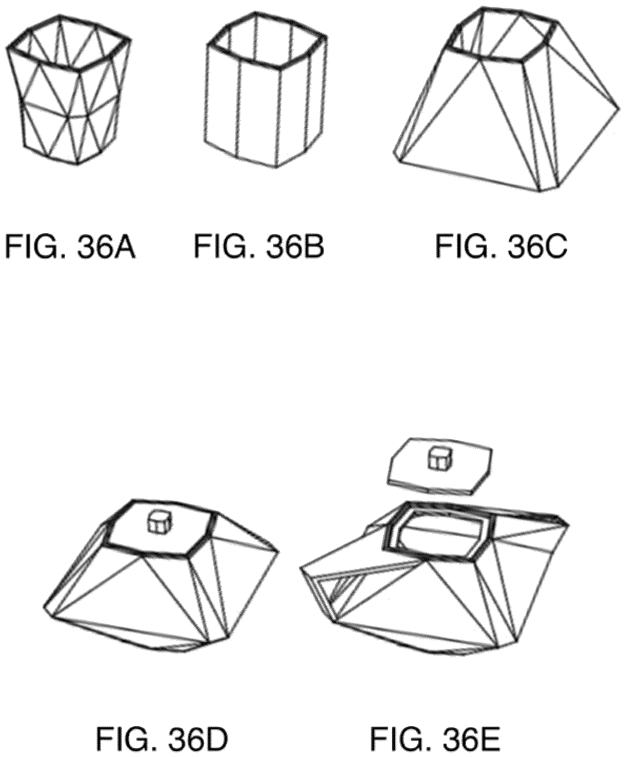

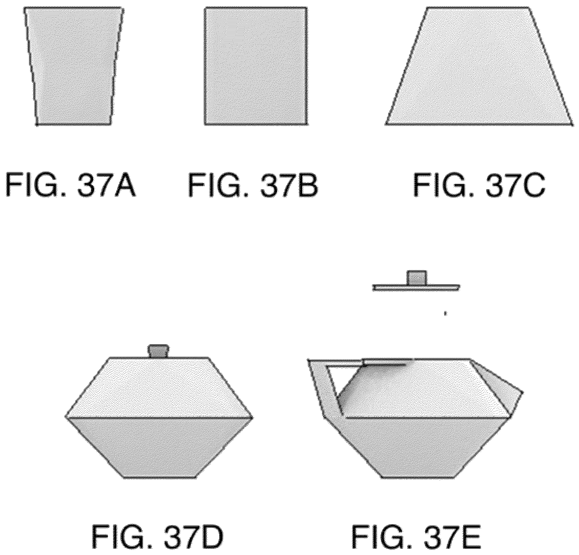

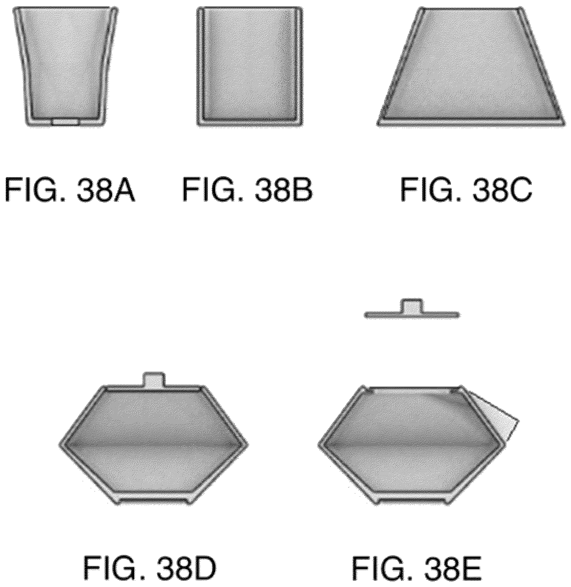

FIGS. 33A to 39 show other examples of tableware described in the tableware database stored in the tableware storage 121 of the imaging device according to the present embodiment, including tableware in which designs of corners and peripheries of rims are consistent, and tableware in which bottom surfaces of plates larger than a predetermined size have dimensions and shapes capable of receiving raised platforms of other pieces of tableware. FIG. 33A shows a bowl, FIG. 33B a chopstick stand, FIG. 33C a vase, FIG. 33D a small bottle, FIG. 33E a teapot, and FIG. 33F the same tableware shown in FIG. 23B for comparison. FIGS. 34A to 34E each show a top view of corresponding one of the tableware of FIGS. 33A to 33E, FIGS. 35A to 35E each show a diagram of corresponding one of the tableware of FIGS. 33A to 33E as viewed from an obliquely lower side, FIGS. 36A to 36E each show a diagram of corresponding one of the tableware of FIGS. 33A to 33E as viewed from an obliquely upper side, FIGS. 37A to 37E each show an image of corresponding one of the tableware of FIGS. 33A to 33E as viewed from the front, and FIGS. 38A to 38E each show a front cross-sectional view of corresponding one of the tableware of FIGS. 33A to 33E. In the pieces of any tableware, designs of corners and peripheries of rims, and widths of raised platforms are consistent.

### Fourth Embodiment

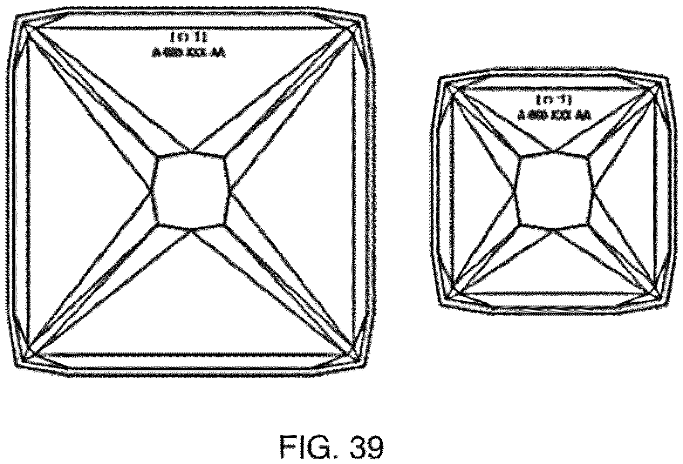

The imaging device according to the present embodiment includes, in the tableware database stored in the tableware storage 121, tableware in which information such as a name of a manufacturer, a product name, and a serial number is recorded on a surface of the tableware. FIG. 39 shows an example of tableware with the name of the manufacturer, product name, and serial number of the tableware described on the surface thereof. In the manufacturing process of tableware, the name of the manufacturer, product name, and serial number, for example, of the tableware are marked on the surface of the tableware by engraving, glazing, and printing, for example. When food is served on such tableware and an image is captured, the name of the manufacturer, product name, and serial number, for example, of the tableware are reflected in the image. Posting an image on a social networking service (SNS) or other web sites that show the name of the manufacturer, product name, and serial number, for example, of the tableware allows the user to be linked to the posted image and the SNS account.

The above described present invention should include various embodiments, for example, not described here. Accordingly, the technical scope of the present invention is defined only by the invention specifics recited in the claims, which are reasonable from the above description.

### Description of Reference Numerals

10: Imaging Device
11: CPU
12: Storage
13: Input-Output Interface (I/O)
14: Display
15: Camera
16: Input Unit
111: Tableware Selector
112: Arrangement Generator
113: Composition Selector
114: Tableware Database Editor
121: Storage
122: Tableware Storage
30: Guide
181-183, 191-193, 201-203, 211-213, 221-223, and 291-293: Tableware

## Claims

1. An imaging program causing an imaging device including a display, a camera, an input unit that accepts input from a user, and a computation unit to embody the functions of:
displaying a list of one or more pieces of tableware listed in a tableware database on the display and accepting a selection of one or more pieces of tableware to be used from the list of one or more pieces of tableware;
determining, from the selected one or more pieces of tableware, one or more candidates for an optimal arrangement of the selected one or more pieces of tableware on the basis of an arrangement table, and displaying the determined one or more candidates on the display;
accepting a selection from the one or more candidates and generating a guide for a selected arrangement; and
activating the camera and displaying the guide in an image capturing screen by the camera displayed on the display.

2. The imaging program according to claim 1, wherein the one or more pieces of tableware listed in the tableware database all have a same height.

3. The imaging program according to claim 1, wherein the one or more pieces of tableware listed in the tableware database all have a rim with a same thickness.

4. The imaging program according to claim 1, wherein all of the one or more pieces of tableware listed in the tableware database each have a consistent design for at least one of corners and rims of the tableware.

5. The imaging program according to claim 1, wherein the guide is indicated by an outline of each of the pieces of tableware in the selected arrangement.

6. The imaging program according to claim 1, wherein the guide indicates an arrangement of the pieces of tableware to be imaged from directly above the pieces of tableware to be imaged.

7. The imaging program according to claim 1, further causing the imaging device to embody the functions of: displaying a list of all optimal arrangements listed in the arrangement table on the display and accepting a selection of a configuration desired by the user.

8. The imaging program according to claim 7, wherein the function of accepting the selection of the configuration accepts a selection of a situation in which tableware is used, and displays on the display a list of configurations narrowed down by the situation in which the tableware is used.

9. The imaging program according to claim 7, wherein the function of accepting the selection of the configuration accepts a selection of an aspect ratio of an image obtained by imaging by the camera, and displays on the display a list of configurations narrowed down by the aspect ratio of the image.

10. The imaging program according to claim 1, further causing the imaging device to embody: a tableware database editing function of accepting an input of the user to perform editing of at least one of changing a number of one or more pieces of tableware listed in the tableware database, or adding a new piece of tableware to the tableware database.

11. The imaging program according to claim 1, further causing the imaging device to embody the function of: adjusting an arrangement of the pieces of tableware configuring the selected arrangement.

12. The imaging program according to claim 11, wherein the function of adjusting the arrangement of the pieces of tableware causes the adjusted arrangement to be stored in the arrangement table.

13. The imaging program according to claim 1, further causing the imaging device to embody: an image editing function of performing image processing on an image captured by the camera.

14. The imaging program according to claim 1, wherein when x is a length of a side or diameter of a piece of tableware with a side of a smallest length or diameter among the one or more pieces of tableware listed in the tableware database, a length of a side or diameter or maximum width of another piece of tableware is n × x + P(n-1) times (where n is an integer greater than or equal to 1, and P is greater than or equal to 0).

15. The imaging program according to claim 1, wherein at least one of a name of a manufacturer, product name, or serial number of the one or more pieces of tableware listed in the tableware database is marked on a surface of the one or more pieces of tableware.

16. An imaging method causing an imaging device including a display, a camera, an input unit that accepts input from a user, and a computation unit to perform the steps of:
displaying a list of one or more pieces of tableware listed in a tableware database on the display and accepting a selection of one or more pieces of tableware to be used from the list of one or more pieces of tableware;
determining, from the selected one or more pieces of tableware, one or more candidates for an optimal arrangement of the selected one or more pieces of tableware on the basis of an arrangement table, and displaying the determined one or more candidates on the display;
accepting a selection from the one or more candidates and generating a guide for a selected candidate; and
activating the camera and displaying the guide in an image capturing screen by the camera displayed on the display.

17. An imaging device comprising:
a display;
a camera;
an input unit that accepts input from a user; and
a computation unit including:
a tableware selector that displays a list of one or more pieces of tableware listed in a tableware database on the display and accepts a selection of one or more pieces of tableware to be used from the list of one or more pieces of tableware; and
an arrangement generator that determines one or more candidates for an optimal arrangement of the one or more pieces of tableware on the basis of an arrangement table, shows the determined one or more candidates on the display, accepts a selection of a desired arrangement from among the one or more candidates, and then generates a guide for the selected candidate and displays it on the display, wherein
the arrangement generator displays the guide on the display, and then activates the camera, and the guide is displayed on an image capturing screen of the camera.
